# EUROPEAN PATENT SPECIFICATION

(11) **EP 4 572 912 B1**
(45) Date of publication and mention of the grant of the patent: **06.05.2026**
(21) Application number: 23764705.2
(22) Date of filing: 09.08.2023
(51) Int. Cl.: B23P 19/04, B23P 21/00, B21J 15/02, B25J 15/00, B25J 9/00, B25J 9/16, B25J 9/02, E05D 3/14, E05D 11/10, E05F 5/00

(54) **ASSEMBLY METHOD, ASSEMBLY PLANT AND ASSEMBLY LINE**
MONTAGEVERFAHREN, MONTAGEANLAGE UND MONTAGELINIE
PROCÉDÉ D'ASSEMBLAGE, INSTALLATION D'ASSEMBLAGE ET CHAÎNE D'ASSEMBLAGE

(30) Priority: 18.08.2022 IT 202200017403
(43) Date of publication of application: 25.06.2025
(73) Proprietor: Cosberg S.p.A., 24030 Terno D'Isola (Bergamo) (IT)
(72) Inventor: VISCARDI, Gianluigi Carlo, 24030 Terno d'Isola, Bergamo (IT)
(74) Representative: Crippa, Paolo Ernesto
(86) International application number: PCT/IB2023/058040
(87) International publication number: WO 2024/038355

(56) References cited:
- WO-A1-2014/177985
- WO-A1-2018/029559
- WO-A1-2018/029563
- CN-A- 112 247 554
- CN-A- 113 857 847
- DE-A1- 4 102 899

## Description

### Field of application

The present invention relates to a method for assembling multicomponent items, an assembly plant, and an assembly line comprising said assembly plant. The present invention is applied, in particular but not exclusively, in the assembly of hinges for furniture doors.

In the field of plants for assembling multicomponent items, it is necessary for the machines to be capable of manufacturing increased volumes in a short time. Indeed, only in the presence of such features may be the cost of the plant be amortized in a short time and the investment be remunerative.

Therefore, in the field of manufacturing machines for such plants, the tendency exists to create increasingly fast lines, at times capable of manufacturing tens of thousands of items a day.

It is thus essential to improve the individual assembly plants of a line so as to optimize the assembly processes to obtain improved productivity of the individual plant, which has a positive effect on the production capacity of the entire line.

Disadvantageously, assembly plants for multicomponent items of the background art do not allow achieving increased levels of productivity, which are required today to meet the current market needs. An example of such a plant is known from document CN 112247554 A.

Moreover, disadvantageously assembly plants for multicomponent items of the background art are capable of performing one assembly operation alone for each stationary status of the component receiving the assembly, where stationary status means the status in which the receiving component, e.g., the wing of a hinge, for example placed on a grabbing device (e.g., a pallet or a laying base) remains available for a same assembly station without undergoing operations and/or moving. In other words, the stationary status of a component (and hence preferably also of the related grabbing device) indicates the same remaining in the same assembly station.

For example, without losing in generality, in the stationary status, the component actually remains stationary in the assembly station, for example, when this is placed on a pallet which slides along an assembly line, and stops at the station, or it is kept in movement, for example, when the receiving component is placed on a rotary table or on a laying station, but it remains in the same assembly status.

Therefore, known assembly lines generally provide several series of individual assembly stations, each being associated with a respective stationary status in which the component receives in assembly one single component at a time and is involved in each assembly operation.

This disadvantageously affects the length of the assembly line and the use of excessive resources to create each station/plant, with apparent disadvantages in terms of overall volumes within the production sites, clearly in addition to the production times of each individual multicomponent item which must cross many stations before being terminated.

In the present disclosure, for convenience and generality of definition, reference will be generally made to a grabbing device for a multicomponent item to preferably, but not exclusively, indicate a pallet suitable for be moved on an assembly line, or a laying on a rotary table or, in general, any laying base, suitable for remain fixed or moving while the receiving component is in its stationary status.

### Solution of the invention

Therefore, the need is strongly felt to provide an assembly method, an assembly plant and an assembly line for multicomponent items capable of overcoming the drawbacks typical of the background art and which meet the production needs of the industry.

In particular, it is an object of the present invention to accelerate the assembly operations of a multicomponent item, e.g., a hinge.

Moreover, it is the object of the present invention to also simplify the assembly operations so as to increase the production volumes, time of the multicomponent item assembly stations according to the background art being equal.

It is a further object of the present invention to increase the flexibility of the line, i.e., to adapt the assembly line quickly and automatically to construction variants of the multicomponent item, thus only affecting the sub-steps of the assembly, without acting on the development of the main line.

Such a need is met by a method for assembling multicomponent items, by an assembly plant and by an assembly line according to the appended independent claims. The claims dependent thereon describe preferred or advantageous embodiments of the invention, involving further advantageous aspects.

### Description of the drawings

The features and advantages of the present invention will however become apparent from the following description of some preferred embodiments thereof, given by way of non-limiting indication, with reference to the accompanying drawings, in which:
- Figure 1 shows a perspective view of a multicomponent item which can be assembled according to an embodiment of the present invention, in which the multicomponent item is a hinge;
- Figure 2a shows a perspective view of a multicomponent item which can be assembled according to an embodiment of the present invention, in which a rivet in insertion position is shown;
- Figure 2b shows the same perspective view of the component item in Figure 2a, in which the rivet is shown in inserted position;
- Figure 3 shows a perspective view of a joint assembly for a multicomponent item which can be assembled according to an embodiment of the present invention;
- Figure 4a shows a first sub-assembly for assembling a joint assembly in an embodiment of the present invention;
- Figure 4b shows a second sub-assembly for assembling a joint assembly in an embodiment of the present invention;
- Figure 5 shows an exploded view of the components (a, b, c, d) forming the joint assembly according to the example in Figure 3, and of a rivet (e) suitable for connect said joint assembly in an articulated manner together with a receiving component to form a multicomponent item which can be assembled according to an embodiment of the present invention;
- Figure 6a shows a side elevation view of a first sub-assembly and a second sub-assembly assemblable with each other to form a joint assembly, which can be assembled according to an embodiment of the present invention;
- Figure 6b shows a side elevation view of a joint assembly in assembled format, comprising the sub-assemblies in Figure 6a;

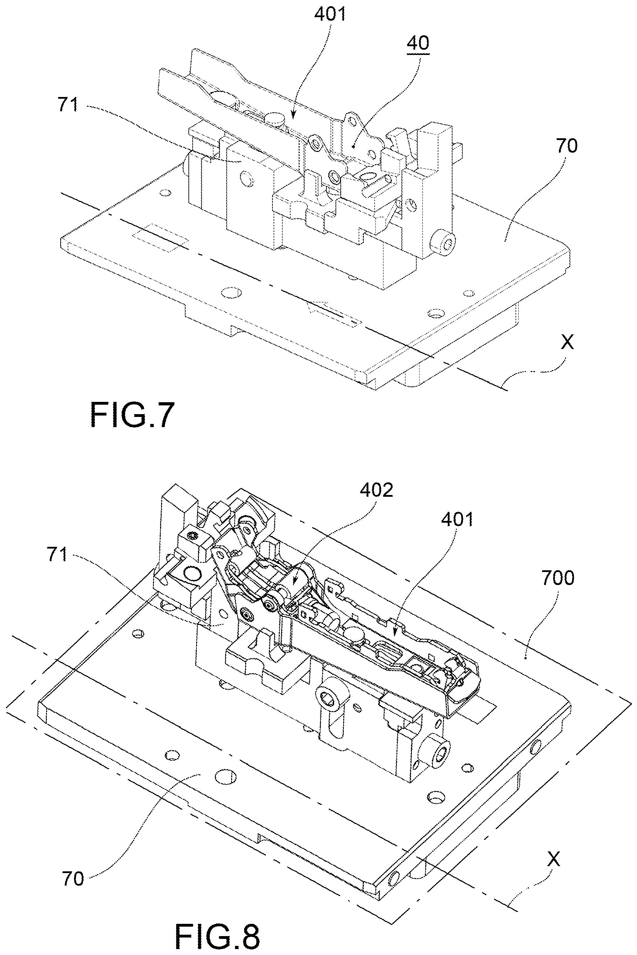

- Figure 7 shows a diagrammatic perspective view of a grabbing device which can be used according to claim 12 on which a receiving component is housed;
- Figure 8 shows a diagrammatic perspective view of a grabbing device on which a previously assembled multicomponent item is housed;
- Figure 9 shows a diagrammatic perspective view of an assembly plant comprising a first and second manipulator arm according to an embodiment of the present invention, in which the first sub-assembly and the second sub-assembly are in mutual assembly position;
- Figure 10 shows a front elevation view of an enlargement of the assembly plant in Figure 9;
- Figure 11 shows a perspective view of an assembly plant according to an embodiment of the present invention, in which the first and second sub-assemblies are assembled to form a joint assembly and are in suspended-in-air position;
- Figure 12 is a front elevation view of the assembly plant in Figure 11;
- Figure 13 is a perspective enlargement view of an assembly plant according to an embodiment of the present invention;
- Figure 14a shows a front view of a first sub-assembly and a second sub-assembly in suspended-in-air position above a grabbing device carrying a receiving component, according to an embodiment of the present invention, in which said first and second sub-assemblies are in a mutual assembly position;
- Figure 14b shows the same embodiment depicted in Figure 14a, in which said first and second sub-assemblies are in assembled position and form a joint assembly;
- Figure 15 shows a perspective view of an assembly plant according to an embodiment of the present invention, comprising a riveting apparatus;

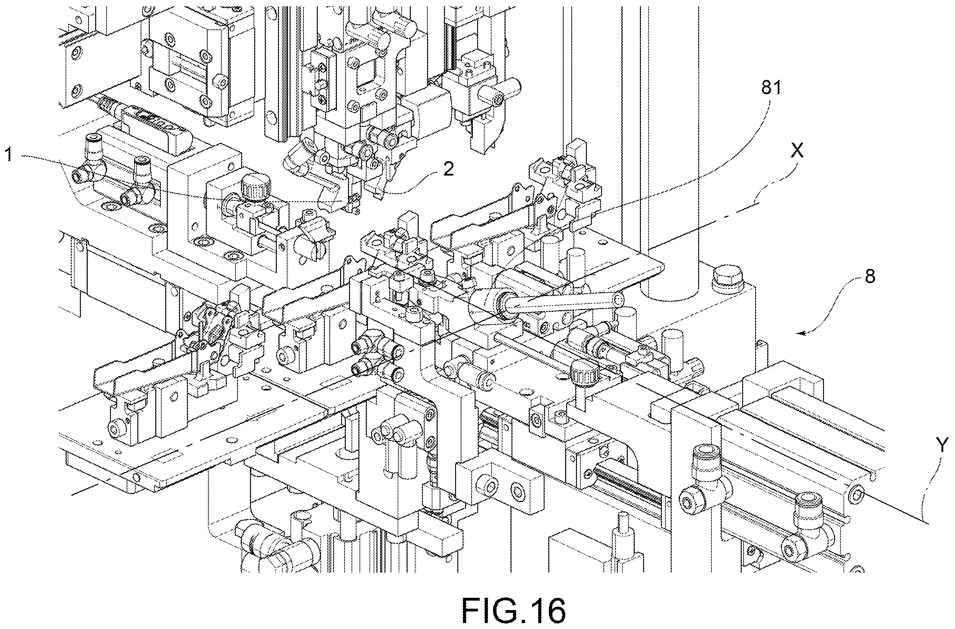

- Figure 16 shows an enlarged perspective view of the assembly plant in Figure 15;
- Figure 17 shows a perspective assembly view of an assembly plant according to an embodiment of the present invention;
- Figure 18 shows a perspective view of a first pre-assembly group of an assembly plant according to an embodiment of the present invention;
- Figure 19 shows an enlarged detailed view of a portion of the first assembly group in Figure 18, showing, in particular, a third manipulator arm, a rotary table and a greasing station of the first pre-assembly group;
- Figure 20a shows a perspective view of a third manipulator arm according to an embodiment of the present invention;
- Figure 20b shows a front view of the third manipulator arm in Figure 20a;

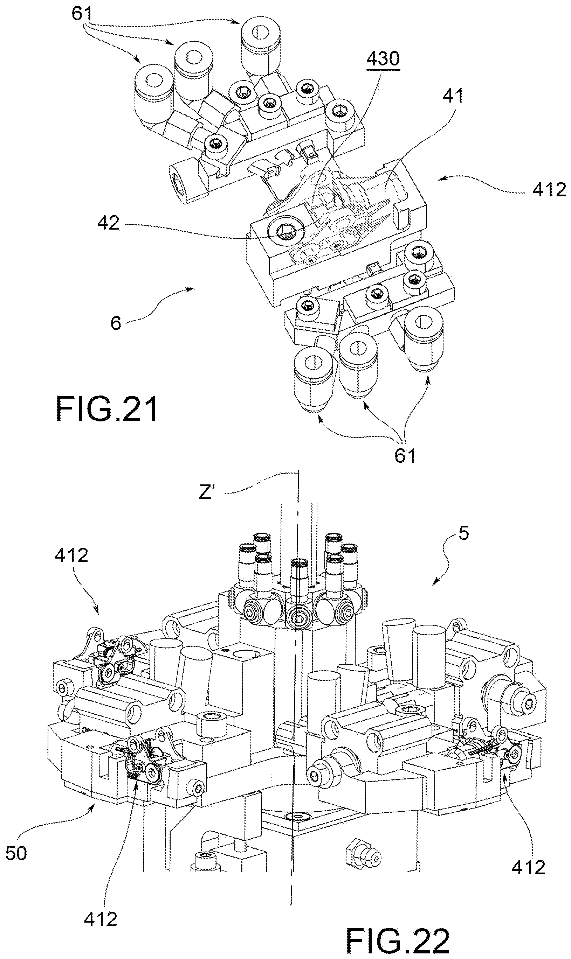

- Figure 21 shows an enlarged perspective view of a greasing station of the first pre-assembly group according to an embodiment of the present invention;
- Figure 22 shows a perspective view of a rotary table of the first pre-assembly group according to an embodiment of the present invention;
- Figure 23 shows a perspective view of a second pre-assembly group of an assembly plant according to an embodiment of the present invention;
- Figure 24 shows a front view of a portion of the first pre-assembly group which shows a second manipulator arm according to an embodiment of the present invention.

### Detailed description

With reference to the aforesaid drawings, reference numeral 9 indicates as a whole an assembly plant 9 for multicomponent items 4.

Multicomponent items mean items consisting of a variety of components 41, 42, 43, 44, 45, 401, assembled with one another to form the final multicomponent item.

In particular, according to an example, the multicomponent item 4 is a hinge 4.

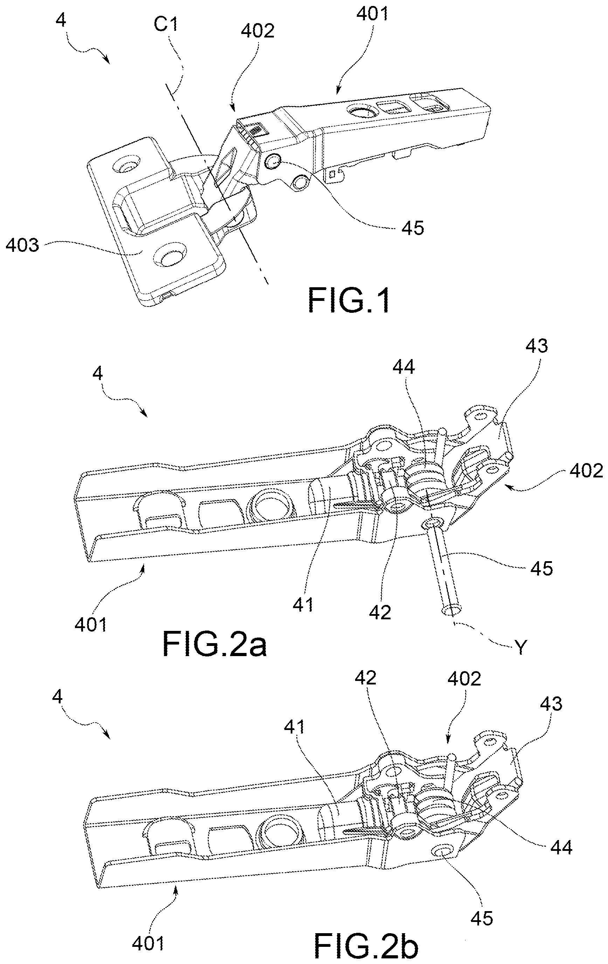

With reference to Figure 1, the multicomponent item 4 is a hinge for furniture doors, according to a first example. Preferably, according to such an example, the multicomponent item 4 is a "slide-on" type of hinge.

In a general embodiment, the multicomponent item 4 is made at least by means of the assembly of a receiving component 401 and a joint assembly 402. In particular, in an embodiment, a receiving seat 40 suitable for accommodate the joint assembly 402 is obtained in the receiving component 401.

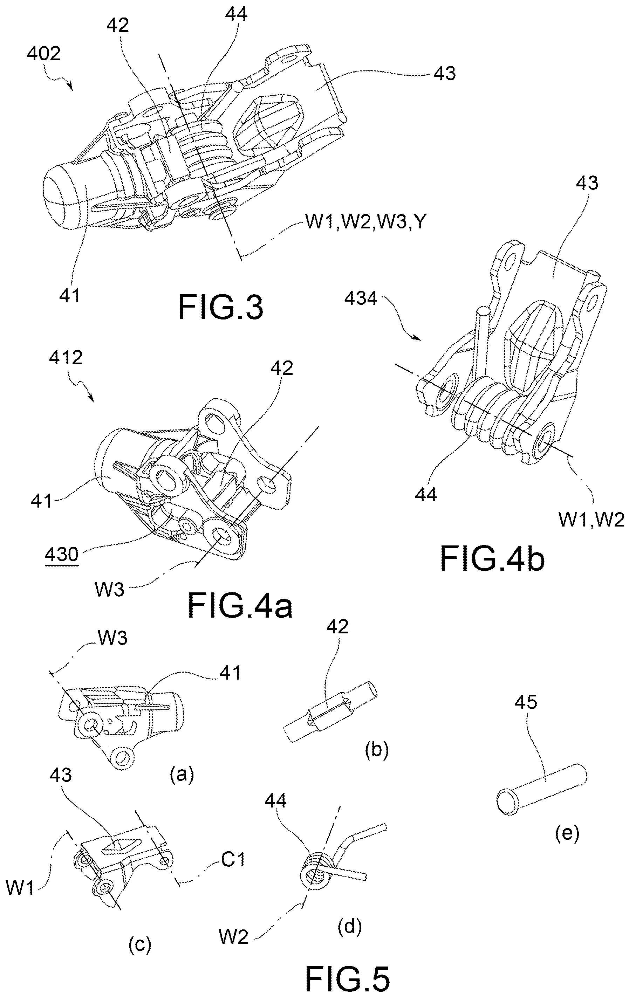

With reference to Figures 3, 4a and 4b, joint assembly 402 means an assembly formed by at least a first sub-assembly 412 and a second sub-assembly 434. Said first sub-assembly 412 comprises at least two components 41, 42, and said second sub-assembly 434 comprises one component 43, or at least two components 43, 44.

With reference to Figure 3, in an embodiment, joint assembly 402 in the present disclosure means an assembly comprising a plurality of components 41, 42, 43, 44.

In a constructional variant, for example, with reference to Figure 1, when assembled, the multicomponent item 4 also comprises one or more auxiliary components 403.

The present invention relates to a method for assembling sub-assemblies 412, 434 to a receiving component 401 in an assembly plant 9.

Said assembly method comprises the following steps:
a) providing, in said assembly plant 9, at least one assembly station, one or more sub-stations 91, 92 proximal to said assembly station, and at least one assembly device 1, in which a receiving component 401 temporarily stops in said assembly station;
b) picking, by means of said at least one assembly device 1, at least two sub-assemblies 412, 434 from said one or more sub-stations 91, 92 of said assembly plant 9;
c) keeping said receiving component 401 in stationary status at least during the next step of the method:
d) assembling, by means of said at least one assembly device 1, said at least two sub-assemblies 412, 434 with said receiving component 401;
where in the stationary status, the receiving component 401 remains in the same assembly status and/or in the same position and/or does not undergo other operations until it receives said at least two sub-assemblies 412, 434.

According to the invention, said first and second sub-assemblies 412, 434 are suitable for being assembled to each other to form a joint assembly 402.

Moreover, according to the invention, the receiving component 401 comprises a receiving seat 40 suitable for accommodating said joint assembly 402.

According to the invention, step b) of the method comprises the following sub-steps:
b1) picking, by means of the at least one assembly device 1, the first sub-assembly 412 and the second sub-assembly 434 and bringing them to a mutual assembly position, in which the first sub-assembly 412 is in an assembly position with the second sub-assembly 434;
b2) assembling, by means of said at least one assembly device 1, the first sub-assembly 412 with the second sub-assembly 434 in a spaced apart manner with respect to the receiving component 401, to form a joint assembly 402.

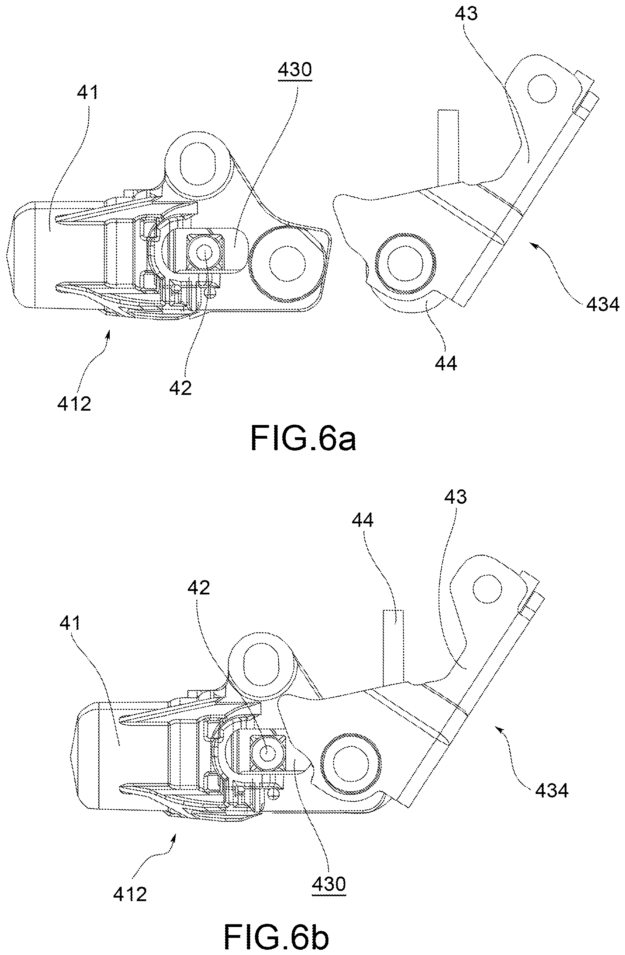

Figures 6a and 6b show the aforesaid sub-assemblies 412, 434 in a mutual assembly position and in an assembled position, respectively.

Moreover, according to the invention, step d) of the method consists in moving said at least one assembly device 1 towards the receiving seat 40 to bring said joint assembly 402 to the receiving seat 40 and assemble the joint assembly 402 with the receiving component 401.

In an embodiment, step b) of the method also occurs while the receiving component 401 is kept in stationary status.

In other words, according to such an embodiment, the receiving component 401 is suitable for remaining in the stationary status during the assembly steps of the joint assembly 402 and during the positioning of the joint assembly 402 in the receiving seat 40 of the receiving component 401.

In an embodiment, the first sub-assembly comprises at least a first component 41 and a second component 42, and the second sub-assembly 434 comprises at least a third component 43 and a fourth component 44.

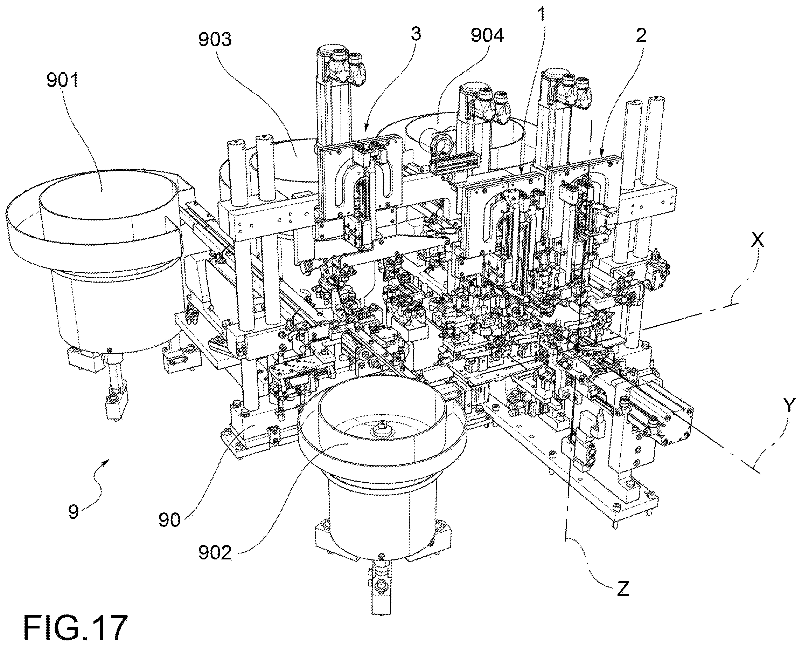

In an embodiment, with reference to Figures 17, 18 and 23, the one or more sub-stations 91, 92 comprise a first pre-assembly group 91 and a second pre-assembly group 92, respectively.

According to such an embodiment, the assembly method comprises, prior to step b), the following steps:
a1) assembling at least the first component 41 and the second component 42 to each other in the first pre-assembly group 91 to form the first sub-assembly 412;
a11) assembling at least the third component 43 and the fourth component 44 to each other in the second pre-assembly group 92 to form the second sub-assembly 434.

In an embodiment of the invention, steps a1) and a11) also occur while the receiving component 401 is in stationary status.

Moreover, in an alternative embodiment, the receiving component 401 never interacts, i.e., it never comes into contact, with the joint assembly 402 or with the components thereof until the end of step d).

In an advantageous constructional variant, the pre-assembly of the first sub-assembly 412 and the second sub-assembly 434 occurs simultaneously.

In an advantageous embodiment, steps a1) and a11) terminate simultaneously. I.e., according to such an embodiment, the first sub-assembly 412 and the second sub-assembly 434 become available for the subsequent assembly to form the joint assembly 402 simultaneously.

In other words, the first pre-assembly group 91 is suitable for finishing the pre-assembly of said two or more components 41, 42, 43, 44 simultaneously to the second pre-assembly group 92. I.e., the first and second pre-assembly groups 91, 92 reach the end of the pre-assembly of the respective sub-assemblies 412, 434 together.

In an advantageous embodiment, steps b1 and b2) are performed while keeping the first sub-assembly 412 and the second sub-assembly 434 in suspended-in-air position, i.e., avoiding contact with any support other than said at least one or more assembly devices 1.

Advantageously, such an embodiment allows decreasing the volumes of the assembly station, the provision of a support seat or a specific stationary station in which to assemble the first sub-assembly 412 with the second sub-assembly 434 not being required.

Moreover, such an embodiment allows increasing productivity of an assembly line in which there is inserted the assembly plant where the assembly of the sub-assemblies occurs, making the joint assembly 402 directly available for subsequent assembly operations of the multicomponent item 4.

According to a yet further advantage, providing an assembly in a suspended-in-air position allows operating more easily only on the necessary components, without requiring a receiving component 401, e.g., a wing 401 of a hinge 4, always present as a support base for each assembly. This also allows simplifying the groups suitable for performing the assembly and automatically and more flexibly managing the control systems of the manipulators involved in the working steps.

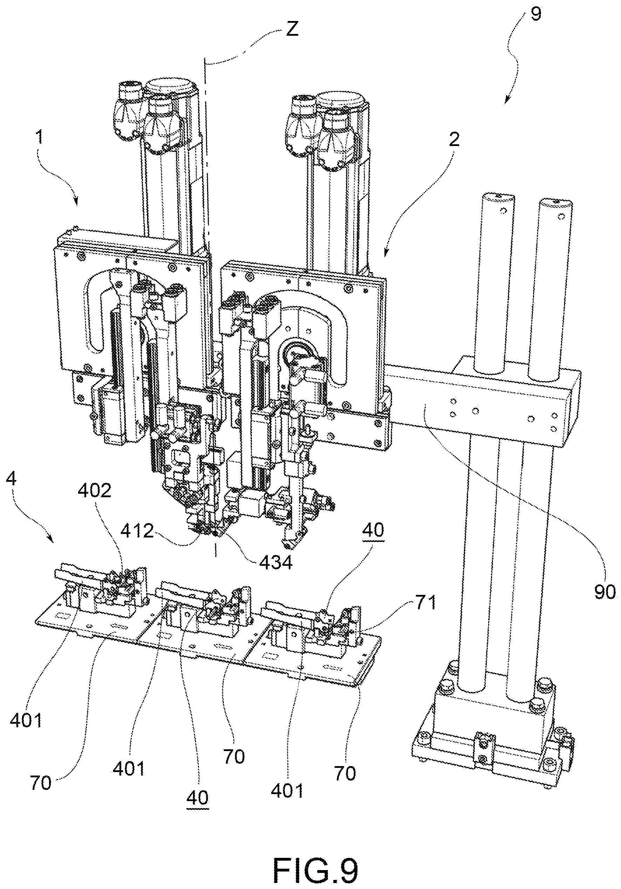

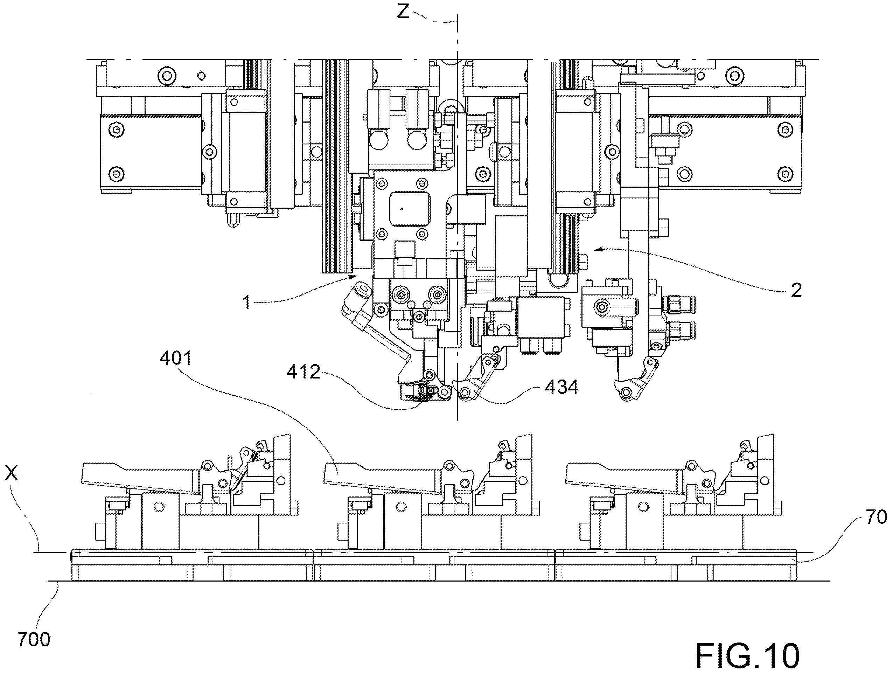

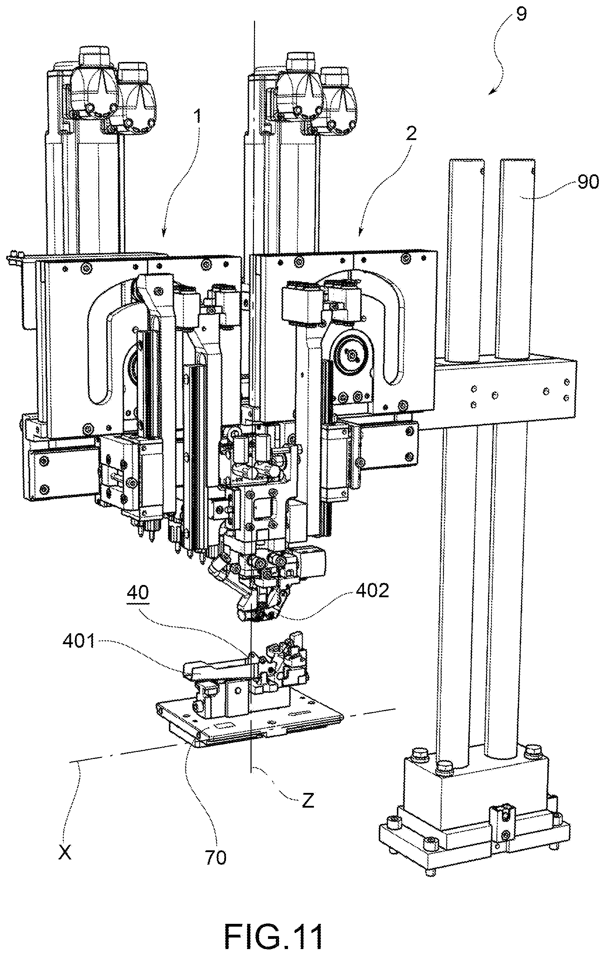

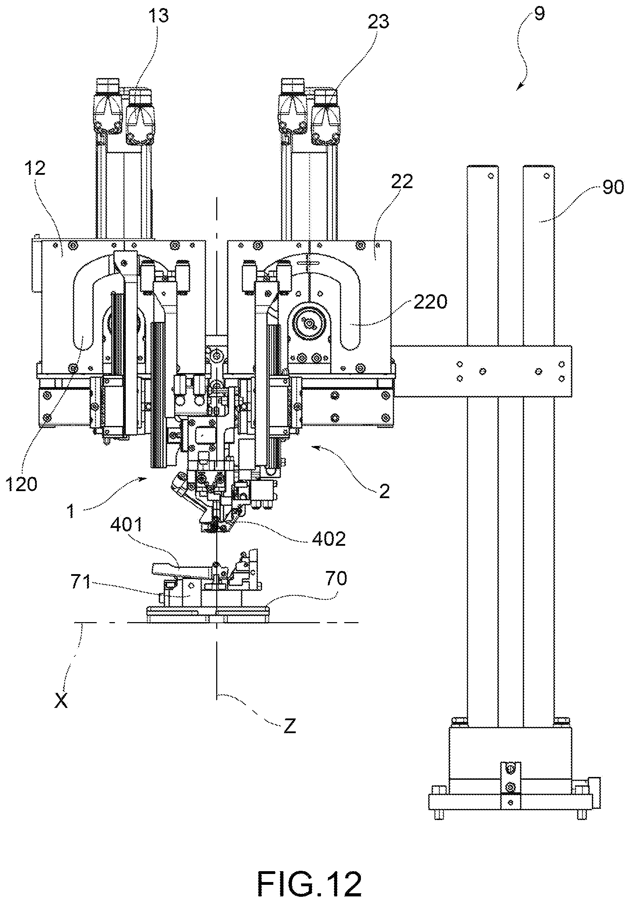

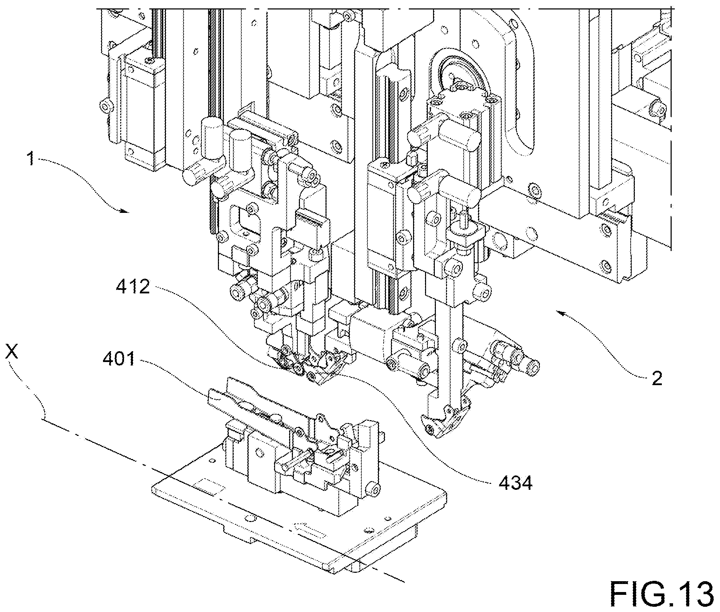

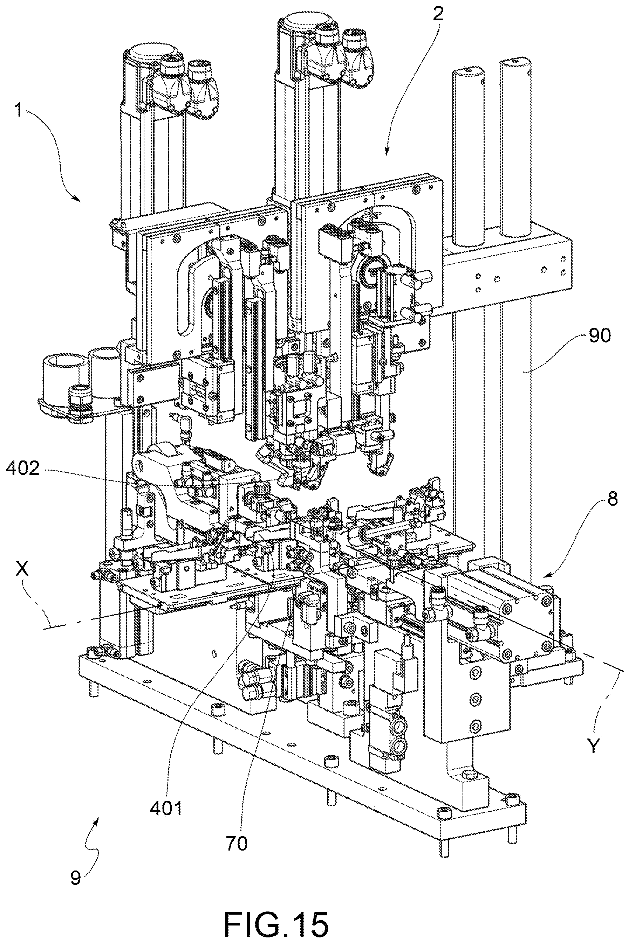

In an advantageous embodiment, with reference to the embodiments in Figures 9 to 15, the at least one assembly device 1 comprises a first manipulator arm 1 and a second manipulator arm 2.

Preferably, during step b) of the assembly method, the first manipulator arm 1 picks the first sub-assembly 412 and the second manipulator arm 2 picks the second sub-assembly 434, and said manipulator arms 1, 2 cooperate to assemble said first and second sub-assemblies 412, 434 therebetween to form a joint assembly 402.

Moreover, preferably during step d), at least one of said first and second manipulator arms 1, 2 is moved to bring said joint assembly 402 in assembly with the receiving component 401.

Preferably, the receiving component 401 remains in stationary status during step b), i.e., it does not undergo further assembly operations during the mutual assembly between the first and second sub-assemblies 412, 434 to form the joint assembly 402.

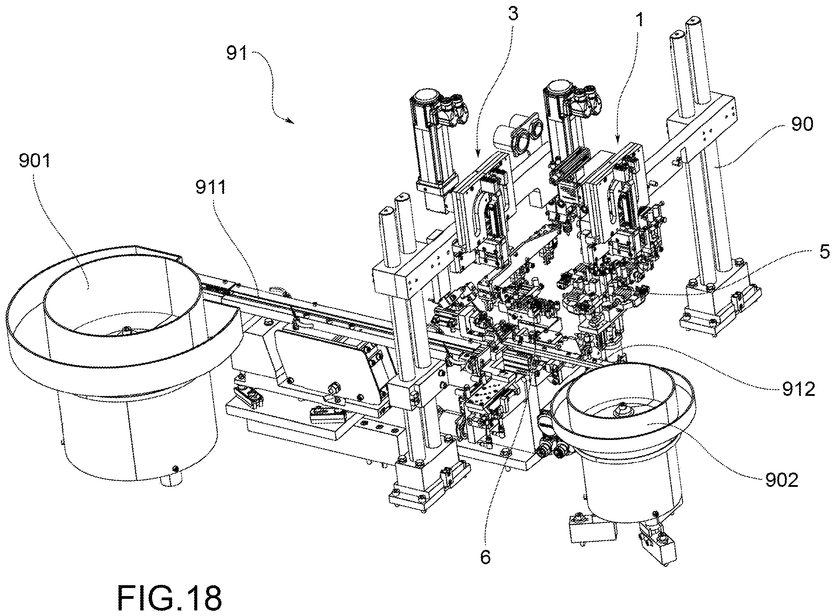

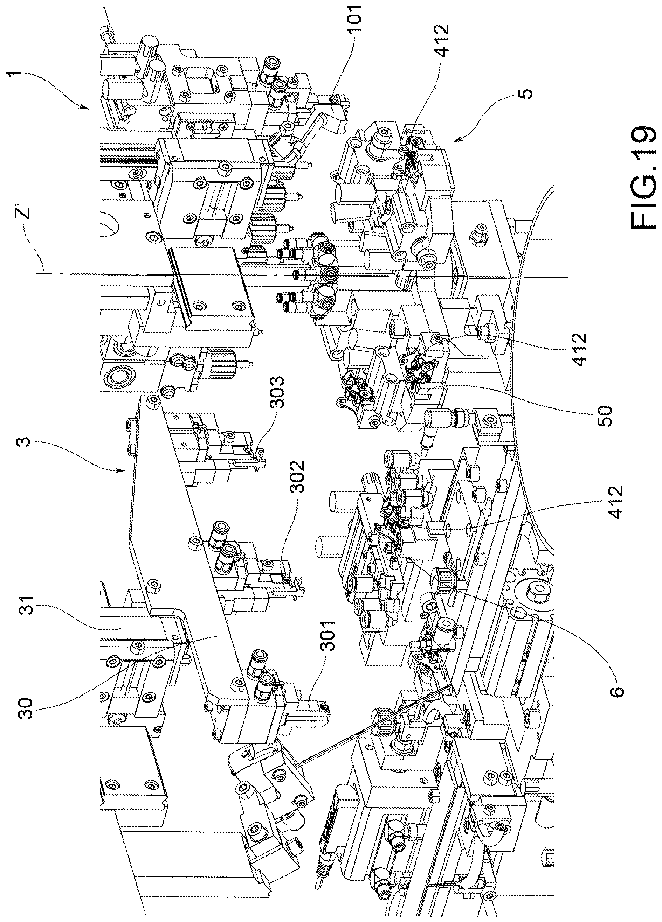

In an advantageous embodiment, for example, with reference to Figures 18 to 20b, the first pre-assembly group 91 comprises a third manipulator arm 3 suitable for pre-assembling the first component 41 and the second component 42 to each other to form the first sub-assembly 412.

In a preferred embodiment, one or more of said first, second and third manipulator arms 1, 2, 3 are pick and place robots. For example, the structural and functional features of said first, second and third manipulator arms 1, 2, 3 are illustrated in documents WO2014/177985 and WO2014/177979 to the Applicant.

In a preferred embodiment, the third manipulator arm 3 comprises a guiding wall 32 in which a guiding groove 320 is obtained. The third manipulator arm 3 further comprises an arm 31 and a gripper-holder group 30 sustained by said arm 31 and integral therewith.

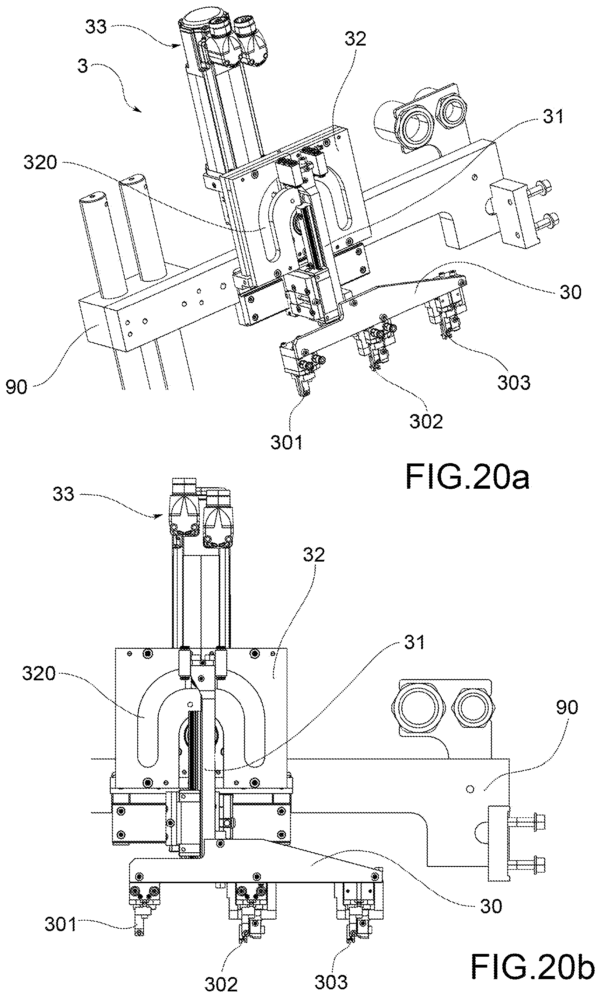

In a particularly advantageous embodiment, for example, shown in Figures 20a and 20b, the gripper-holder group 30 of the third manipulator arm 3 sustains three grippers, i.e., the first gripper 301, a second gripper 302, and a third gripper 303.

In such an embodiment, step a1) of the assembly method comprises the following sub-steps:
m) picking, by means of the first gripper 301, said first component 41 and bringing it to a second component insertion zone;
n) assembling said second component 42 with said first component 41 in said second component insertion zone to form the first sub-assembly 412;
o) picking, by means of the second gripper 302, said first sub-assembly 412 and bringing it to a greasing station 6;
p) greasing said first sub-assembly 412 in said greasing station 6;
q) picking, by means of the third gripper 303, said greased first sub-assembly 412 from the greasing station 6 and bringing it to a standby station 50 to be picked by the first manipulator arm 1.

Advantageously, in such an embodiment, the third manipulator arm 3 is suitable for simultaneously performing three operations which contribute to assembling the first sub-assembly 412.

Indeed, in a preferred embodiment, the three grippers 301, 302, 303 move integrally with one another.

Therefore, in such an embodiment, the first gripper 301, the second gripper 302 and the third gripper 303 are suitable for simultaneously performing three separate operations in a single movement of the third manipulator arm 3, preferably in the movement of the third manipulator arm 3 in a single direction.

The movement of the third manipulator arm 3 in the direction opposite to said single direction is a return operation which brings the grippers 301, 302, 303 back to the position initially occupied thereby.

In an advantageous embodiment, the second manipulator arm 2 is suitable both for pre-assembling the third component 43 and the fourth component 44 to form the second sub-assembly 434, and for picking the second pre-assembled sub-assembly 434 and assembling it to the first sub-assembly 412, preferably by the assembly method of the present invention.

In a constructional variant, the second manipulator arm 2 comprises a first gripper 201 suitable for being actuated to open and close so as to grab the fourth component 44 in the picking zone and transport it and position it in the third component 43.

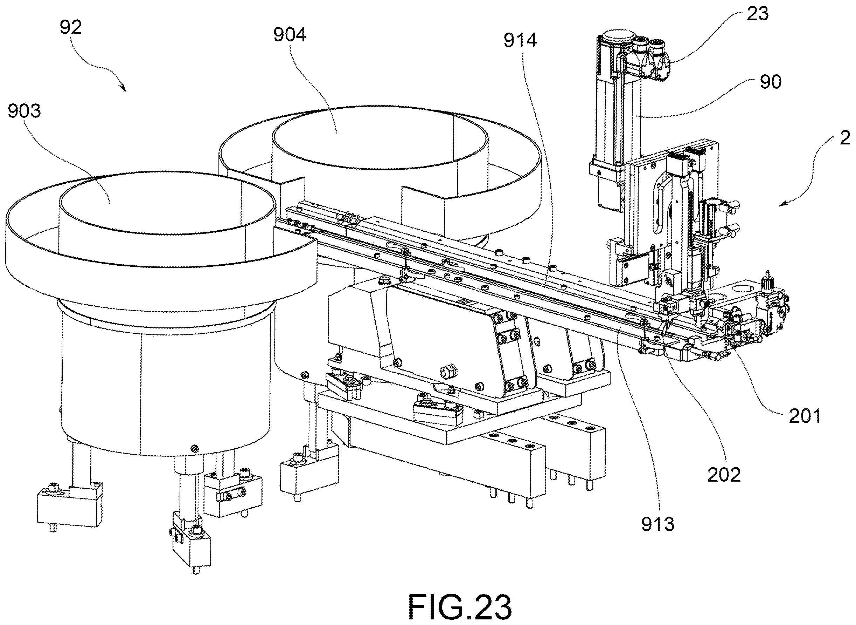

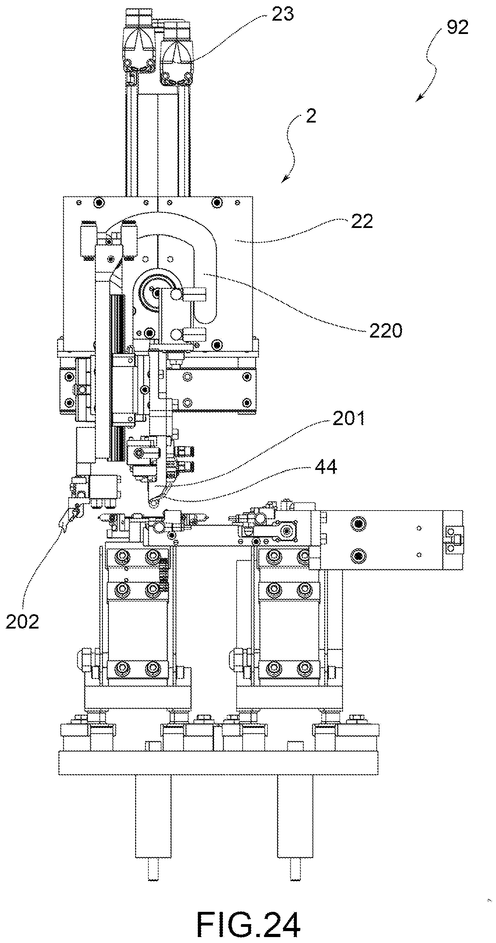

In a preferred embodiment shown in accompanying Figures 23 and 24, for example, the second manipulator arm 2 comprises two grippers, i.e., the first gripper 201 described above, and a second gripper 202.

In an embodiment, the first gripper 201 and the second gripper 202 are not integral with each other during motion.

The second gripper 202 is suitable for picking the second sub-assembly 434 and assembling it together with the first sub-assembly 412, preferably by the assembly method of the present invention.

Preferably, the first gripper 201 and the second gripper 202 of the second manipulator arm 2 are suitable for operating simultaneously on two consecutive second sub-assemblies 434. I.e., the second gripper 202 is suitable for operating on a second sub-assembly 434 once pre-assembled by means of the first gripper 201.

In an embodiment of the invention, step d) comprises the following sub-steps:
d1) sending, on an electronic control unit, a synchronous translation signal to the first 1 and second 2 manipulator arms;
d2) actuating, as a function of said synchronous translation signal, the synchronous translation of said first 1 and second 2 manipulator arms, and bringing said joint assembly 402 to the receiving seat 40.

In a particularly advantageous embodiment, the first and second manipulator arms 1, 2 are suitable for being temporarily constrained to each other to perform step d). In particular, according to such an embodiment, such manipulator arms 1, 2 are suitable for mutually integrally translating towards the receiving seat 40.

In particular, according to such an embodiment, step d2) of the assembly method comprises the following sub-steps:
d21) constraining the first 1 and second 2 manipulator arms to each other so as to make them integral in translation;
d22) actuating in translation at least one of said first and second manipulator arms 1, 2 to drag the other of said first and second manipulator arms 1, 2 and the joint assembly 402 in translation towards the receiving component 401.

Such an embodiment allows significantly saving on electric or mechanical power resources which would be required to bring the sub-assemblies 412 and 434 separately towards a common final assembly area, for example, to bring them separately to the receiving seat 40.

Advantageously, it is thus sufficient to bring power to only one of said manipulator arms to allow the translation of the already assembled joint assembly 402 towards the receiving seat 40.

In a preferred embodiment, the assembly method comprises step a2) of providing a grabbing device 70, such as a pallet 70 or a rotary table, for example, placed on a work surface 700 substantially parallel to a ground surface on which the receiving component 401 is positioned.

In the present disclosure, "ground surface" means an imaginary plane which identifies the base, ground or floor on which an assembly plant 9 suitable for performing the aforesaid method is placed. "Ground surface" is the floor of a production site, for example.

Preferably, the receiving component 401 is positioned on the grabbing device 70 so that step d) consists in positioning said at least two sub-assemblies 412, 434 from the top in the receiving component 401 in stationary status, and assembling said sub-assemblies 412, 434 with the receiving component 401.

In particular, in a particularly advantageous embodiment, the receiving component 401 is positioned on the grabbing device 70 with the receiving seat 40 facing upwards, i.e., on the opposite side with respect to the work surface 700.

Therefore, in such an embodiment, the receiving component 401 is suitable for receiving a joint assembly 402 from the top.

Preferably, according to such an embodiment, during step d), the assembly device 1 translates towards the receiving seat 40 at least along a vertical direction Z, perpendicular to said work surface 700, to place from the top the joint assembly 402 in the receiving seat 40.

Such a positioning of the receiving component 401 on the grabbing device 70 allows the manipulator arms 1, 2 to easily reach the receiving seat 40.

Moreover, the grabbing device 70 preferably comprises a support seat 71 suitable for stably accommodating a receiving component 401 so that the receiving seat 40 faces upwards, i.e., faces the opposite side with respect to the work surface 700.

In a preferred embodiment, the receiving component 401 is kept in the stationary status by keeping the grabbing device 70 in the same position, preferably temporarily immobile, at the assembly station, while the steps of the method according to one or more of the embodiments of the present invention occur.

This preferably occurs when the grabbing device is a pallet 70.

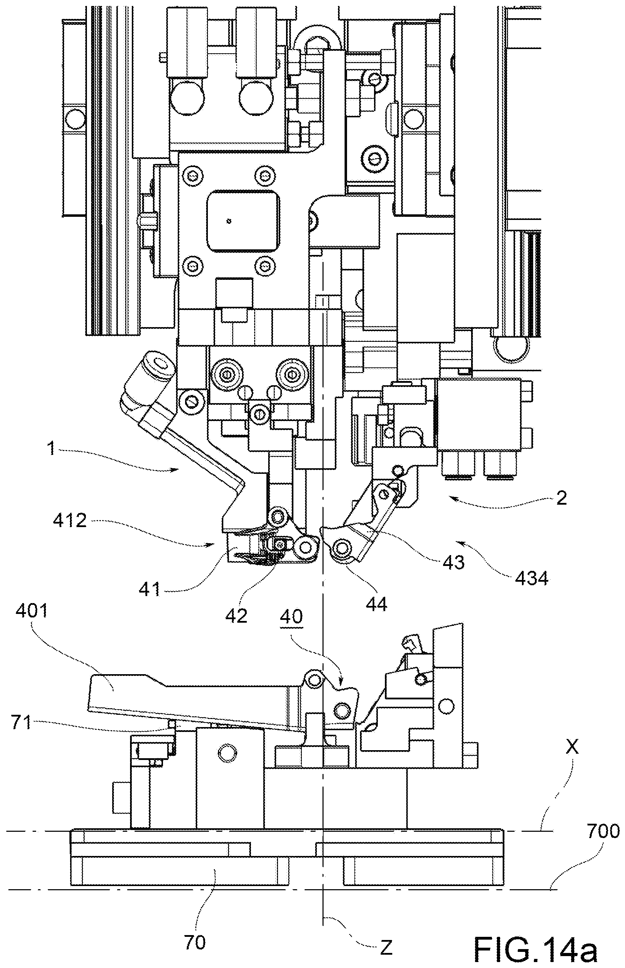

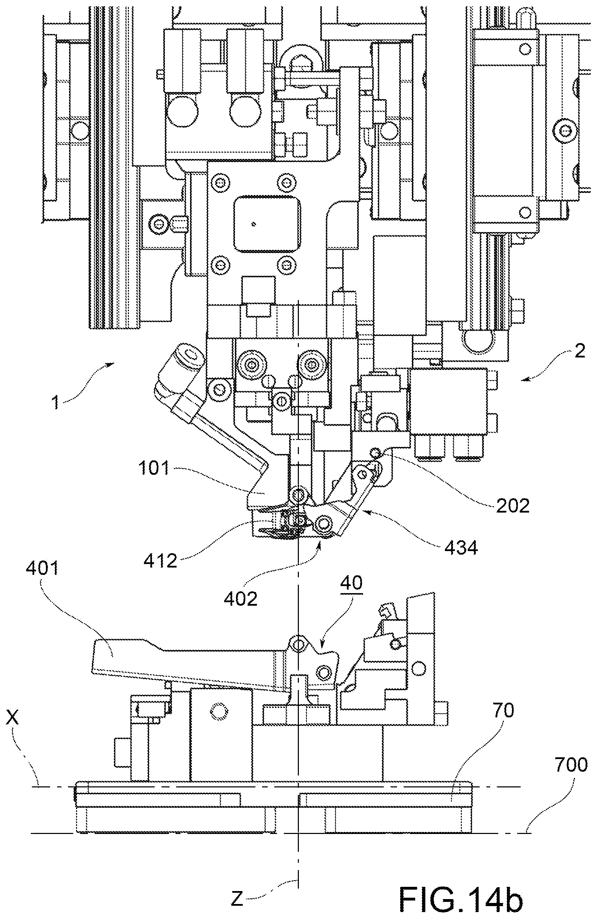

In an embodiment, with reference to Figure 14b, the manipulator arms 1, 2 support the previously assembled joint assembly 402 in a suspended-in-air position which is above, i.e., spaced vertically from, said receiving seat 40. Accordingly, in such an embodiment, to reach the receiving seat 40, the manipulator arms 1, 2 need to perform a translation along a vertical direction Z, towards the bottom, i.e., a descent.

According to such an embodiment, step d) consists in bringing the joint assembly 402 from the suspended-in-air position to said receiving seat 40. Preferably, such a step d) is performed by means of the same first and second manipulator arms 1, 2.

In an advantageous embodiment, the translation of the manipulator arms 1, 2 towards the receiving seat 40 occurs at least along a vertical direction Z, perpendicular to the work surface 700.

According to such an embodiment, step d) further consists in the synchronous descent of each manipulator arm 1, 2 along said vertical direction Z towards said grabbing device 70 and in the placement from the top of the joint assembly 402 in the receiving seat 40.

In an embodiment, the first manipulator arm 1 and the second manipulator arm 2 are suitable for engaging each other, e.g., by geometrical interlocking.

In a preferred embodiment, the first manipulator arm 1 comprises at least a first arm constraining portion and the second manipulator arm 2 comprises at least a second arm constraining portion. Such first and second arm constraining portions are suitable for being mutually engaged to constrain said first and second manipulator arms 1, 2 to each other, i.e., for making said first and second manipulator arms 1, 2 integral in translation.

Preferably, a step d0) of the assembly method includes geometrically constraining the first 1 and second 2 manipulator arms by means of the mutual engagement between said first and second arm constraining portions.

According to a further embodiment, a "master-slave" type control system is applied to said first and second manipulator arms 1, 2 so that, for example, when the second manipulator arm 2 is actuated in translation, also the first manipulator arm 1 is dragged in translation, or vice versa. That is, only one of the two manipulator arms 1, 2 is actuated in translation with power by means of a respective actuation group 13, 23, while the other undergoes the translation in an integral manner due to the dragging caused by the mutual engagement between the respective constraining portions of the first 1 and second 2 arms.

In an embodiment, when assembled, the at least two sub-assemblies 412, 434 and the receiving component 401 form one or more rivet insertion seats suitable for receiving one or more rivets 45 for connecting said at least two sub-assemblies 412, 434 in an articulated manner to the receiving component 401, and where the assembly method comprises, after step d), the following operating steps:
h) providing a riveting apparatus 8 comprising a riveting machine 81, and feeding said riveting apparatus 8 with one or more rivets 45;
i) connecting, by means of said riveting machine 81, the at least two sub-assemblies 412, 434 in an articulated manner to the receiving component 401 by means of the insertion of said one or more rivets 45 in said one or more rivet insertion seats.

In an embodiment, the method for assembling multicomponent items is performed by means of an assembly plant 9.

In an embodiment, the assembly plant 9 is inserted in an assembly line comprising a transport system for the advancement of the item being assembled to the grabbing device 70 along a substantially straight feeding direction X substantially parallel to the work surface 700. Preferably, in such an embodiment, the grabbing device is a pallet 70.

Therefore, according to such an embodiment, pallet 70 is suitable for traveling horizontally on an imaginary transport plane, parallel to the ground surface, taken as a reference. The feeding direction X is thus contained within the imaginary transport plane.

In other words, pallet 70 travels along said feeding direction X and stops on the work surface 700 of the assembly plant 9, bringing the receiving component 401 to stationary status.

Therefore, in such an embodiment, saying that the receiving component 401 is in a stationary status means that the grabbing device (pallet 70) is not moving in said feeding direction X.

In an advantageous embodiment, all the steps of the method occur while the receiving component 401 is in stationary status, i.e., in the same assembly status and/or in the same position.

This advantageously allows the assembly line to be shortened, concentrating a plurality of operations in a single position of the receiving component 401. Countless advantages result from such an aspect in terms of reducing overall plant volumes, increasing line productivity, and in the production feeding speed.

Preferably, the riveting apparatus 8 is placed at the assembly station of the assembly plant 9.

In a preferred embodiment, when the receiving component 401 is in stationary status, the grabbing device 70 remains immobile in a single position at the assembly station, below the suspended-in-air position.

Moreover, in a preferred embodiment, the grabbing device 70 with the receiving component 401 in stationary status is at the riveting apparatus 8.

Moreover, the method preferably comprises, prior to steps a1) and a11), the following component feeding step:
x) feeding the first pre-assembly group 91 and the second pre-assembly group 92 with the respective components 41, 42, 43, 44 by means of respective feeding devices 901, 902, 903, 904.

For clarity of disclosure and to favor the intelligibility of the present invention, the present invention will now be described in detail with reference to a hinge 4 and the components thereof. However, it is apparent that the present invention relates to an assembly method and an assembly plant 9 for a general multicomponent item 4 consisting of a plurality of components 41, 42, 43, 44, 401.

According to the example of a hinge 4, the receiving component 401 is a wing 401 intended to be applied to the wall of a piece of furniture.

According to the example of hinge 4, the joint assembly 402 comprises the following components: a damper 41, a pin 42, preferably a square pin, a connecting rod 43 and a spring 44.

When accommodated in the receiving seat 40, the joint assembly 402 is hingeable, i.e., connectable in an articulated manner, to the receiving component 401 by means of the insertion of one or more rivets 45. The position of such one or more rivets 45 is illustrated in greater detail in the continuation of the present disclosure.

The components of the joint assembly 402 and a rivet 45 are each shown individually in Figure 5 according to the constructional variant in which the multicomponent item is a hinge 4 of the "slide-on" type.

In particular, according to such a variant, damper 41, the connecting rod 43 and spring 44 each comprise a hole, each hole having a hole axis W1, W2, W3, respectively.

In assembly position, damper 41, the connecting rod 43 and spring 44 are positioned so that the respective hole axes W1, W2, W3 are aligned along a common alignment direction.

Similarly, wing 401 comprises a rivet hole having a rivet insertion axis Y.

In final assembly, the components 41, 42, 43, 44 assembled to form the joint assembly 402 are inserted in the receiving seat 40 of wing 401 and the hole axes W1, W2, W3, previously aligned with one another in the assembly position, are also aligned with the rivet insertion axis Y. In other words, in final assembly, the above-mentioned alignment direction is aligned with the rivet insertion axis Y.

The joint assembly 402 is thus connectable in an articulated manner to wing 401 by means of the insertion of said at least one rivet 45 in said holes, previously aligned along the alignment direction, along said rivet insertion axis Y.

Moreover, in particular, damper 41 comprises a pin seat 430 suitable for accommodating pin 42.

Moreover, in an embodiment, the connecting rod 43 comprises a second hole having a hole axis C1, and hinge 4 comprises a box 403 suitable for engaging the connecting rod 43 through a locking means, e.g., a U-bolt, inserted along the hole axis C1.

In a particularly advantageous embodiment, with reference to the example of hinge 4, wing 401 rests on a grabbing device 70 so that the rivet insertion axis Y is parallel to the imaginary transport plane and is orthogonal to the feeding direction X, and so that the receiving seat 40 faces the opposite side with respect to the ground surface.

In other words, in such an embodiment, wing 401 lies horizontally on the grabbing device 70 and the receiving seat 40 faces upwards. Therefore, in such an embodiment, the receiving seat 40 is suitable for receiving a joint assembly 402 arriving from the top.

The present invention relates to an assembly plant 9 as recited in claim 12 for assembling multicomponent items 4 starting from a first sub-assembly 412, a second sub-assembly 434, and a receiving component 401.

According to the invention, the assembly plant 9 is configured to implement the assembly method according to the present invention.

In other words, the receiving component 401 is suitable for remaining at the assembly station in stationary status, i.e., is suitable for remaining in the same assembly status and/or in the same position and/or not undergoing operations until it receives said at least two sub-assemblies 412, 434 and is assembled thereto.

The first sub-assembly 412 and the second sub-assembly 434 are suitable for being assembled to each other to form a joint assembly 402.

The assembly plant 9 comprises a grabbing device 70 on which a receiving component 401 is accommodable, having a receiving seat 40 suitable for receiving said joint assembly 402 formed by said first sub-assembly 412 and said second sub-assembly 434.

The at least one assembly device 1 comprises a first manipulator arm 1 and a second manipulator arm 2 suitable for assembling said sub-assemblies 412, 434 to form the joint assembly 402 in a spaced apart manner with respect to the receiving component 401 and suitable for bring the joint assembly 402 to the receiving seat 40 of the receiving component 401.

The receiving component 401 is suitable for remaining in stationary status during the assembly of the joint assembly 402 and at least until the joint assembly 402 is placed in the receiving seat 40.

In an embodiment, said one or more sub-stations 91, 92 comprise a first pre-assembly group 91 suitable for pre-assembling a first component 41 and a second component 42 to form the first sub-assembly 412, and a second pre-assembly group 92 suitable for pre-assembling a third component 43 and a fourth component 44 to form the second sub-assembly 434.

Preferably, the receiving component 401 is suitable for remaining in the stationary status also during the pre-assembly of such first 412 and second 434 sub-assemblies.

In an embodiment, the grabbing device 70 is placed on a work surface 700, parallel to the ground surface, and the first and second manipulator arms 1, 2 are suitable for mutually integrally translating along a vertical direction Z perpendicular to such a work surface 700.

Moreover, in an embodiment, the assembly plant 9 comprises a plurality of feeding devices 901, 902, 903, 904 for feeding the respective pre-assembly groups 91, 92 with the components 41, 42, 43, 44.

Preferably, such feeding devices 901, 902, 903, 904 are circular or linear electromagnetic vibration self-distributors.

Moreover, the assembly plant 9 preferably comprises a support structure 90 which supports each assembly station, each sub-station 91, 92 and each feeding device 901, 902, 903, 904.

Preferably, with reference to the example of hinge 4, the first pre-assembly group 91 is fed with a damper 41 and with a pin 42 by a damper feeding device 901 and a pin feeding device 902, respectively.

To this end, the first pre-assembly group 91 is suitable for manipulating damper 41 and pin 42, which are fed separately, so as to assemble pin 42 in damper 41.

In an advantageous embodiment, the feeding devices 901 and 902 are each followed by a transport guide 911, 912. Each transport guide 911, 912 is suitable for bringing the respective component 41, 42 to a respective picking zone.

In an advantageous embodiment, with reference to the example of hinge 4, the first pre-assembly group 91 comprises a third manipulator arm 3 suitable for applying pin 42 to damper 41.

In a preferred embodiment, one or more of said first 1, second 2 and third 3 manipulator arms are pick and place robots. For example, the structural and functional features of such one or more manipulator arms 1, 2, 3 are illustrated in documents WO2014/177985 and WO2014/177979 to the Applicant.

In a preferred embodiment, the third manipulator arm 3 is suitable for picking a first component 41, e.g., a damper 41, from the picking zone and bringing it to a second component insertion zone or pin insertion zone.

In a preferred embodiment, the first pre-assembly group 91 comprises a position sensor suitable for detecting the presence of the first component 41 in the picking zone and suitable for sending a presence signal to an electronic control unit for actuating the third manipulator arm 3.

In an embodiment, the third manipulator arm 3 comprises a first gripper 301, sustained by a gripper-holder group 30. In an embodiment, such a first gripper 301 is suitable for being actuated to open and close so as to grab damper 41 in the loading zone and transport it in such a pin insertion zone.

Further, the first pre-assembly group 91 comprises a pin insertion device which inserts pin 42 into the pin seat 430.

Preferably, the pin insertion device is an unpacking device.

In an embodiment, the pin insertion device comprises a centering device and an inserter. The centering device comprises a respective movable punch suitable for positioning damper 41 so that the pin seat 430 is suitable for receiving pin 42. Such a movable punch is moved by a pneumatic cylinder. The inserter comprises a respective movable punch suitable for pushing pin 42 into the pin seat 430.

In particular, when the movable inserter punch advances towards the pin seat 430, the movable centering device punch retracts progressively.

In a constructional variant, the pin insertion device advantageously comprises a linear transducer, e.g., a Sick transducer, suitable for measuring the exact position of the pneumatic cylinder moving the movable centering device punch.

Advantageously, such a linear transducer allows monitoring if the stroke of the pneumatic cylinder moving the centering device has actually been completed and ensuring that pin 42 is actually inserted in the pin seat 430.

According to an embodiment, as mentioned in the paragraphs above, the third manipulator arm 3 comprises a first gripper 301, a second gripper 302 and a third gripper 303. The operation of the three grippers is detailed below with reference to the example in which the first component is a damper 41 and the second component is a pin 42.

In particular, the first gripper 301 is suitable for transporting damper 41 from a picking zone to a pin insertion zone, where a pin insertion device is suitable for inserting pin 42 into the pin seat 430. Preferably, pin 42 is fed by means of the aforesaid dedicated feeding device 902.

The second gripper 302 is suitable for picking the first sub-assembly 412, comprising damper 41 and pin 42 which are joined by means of the operation described in the preceding paragraph, from the pin insertion zone and bringing it to a first greasing station 6.

According to an embodiment, the greasing station 6 comprises greasing means 61 suitable for distributing grease in the pin seat 430.

Preferably, the greasing station 6 comprises a displacement pump suitable for dosing the grease. Moreover, in a constructional variant, such a displacement pump comprises a sensor suitable for detecting the presence of available grease, and an electronic control unit connected to such a sensor is suitable for actuating the pump only if such a sensor detects the availability of grease.

Lastly, the third gripper 303 is suitable for picking the first sub-assembly 412 from the greasing station 6 and bringing it to a standby station 50.

In an embodiment of the invention, the assembly plant 9 comprises a rotary table 5 comprising a supporting plate having two or more subsequent resting positions. Preferably, the standby station 50 is one position of said subsequent resting positions.

In other words, according to such an embodiment, the third gripper 303 is suitable for positioning the first sub-assembly 412 in one position of said subsequent positions of said rotary table 5, preferably in the position corresponding to the standby station 50.

In an embodiment, the rotary table 5 has four subsequent positions.

In a constructional variant, each subsequent position is suitable for receiving and supporting the first sub-assembly 412.

According to an advantageous embodiment, the rotary table 5 is rotationally operable about a second vertical direction Z', parallel to the vertical direction Z and perpendicular to the ground surface.

In an advantageous embodiment, the rotary table 5 is suitable for being stopped during the rotation so that each subsequent position becomes, during the rotation, a standby station 50 for receiving the first sub-assembly 412.

According to an embodiment of the present invention, the first sub-assembly 412 is placed in the standby station 50 and the rotary table 5 performs two subsequent 90° rotations or one 180° rotation about the rotation axis Z, bringing the first sub-assembly 412 to a loading position.

In a variant, each subsequent position of the rotary table 5 comprises compression means suitable for compressing damper 41.

Preferably, such compression means are pneumatic cylinders.

Advantageously, the positioning of the first sub-assembly 412 on the rotary table 5 allows a zone to be obtained which acts as a standby zone for providing said first sub-assembly 412 for picking by the first manipulator arm 1, for assembling it together with a second sub-assembly 434.

Moreover, leaving the first sub-assembly 412 on the rotary table 5 advantageously allows damper 41 to be gradually compressed to be picked by the first manipulator arm 1.

Advantageously, the use of such a rotary table 5 allows the damper to be compressed gradually, avoiding possible breaking which could occur if the damper were compressed in an instantaneous manner.

Simultaneously, the stabilization of the grease deposited in the greasing station inside the pin seat 430 is advantageously promoted.

It is apparent that the three grippers 301, 302, 303 are suitable for operating in series on the same first sub-assembly 412 and on the components thereof, i.e., on said first and second components 41, 42 (according to the example of hinge 4, on damper 41 and on pin 42), i.e., each gripper sequentially operates on the same sub-assembly.

It is just as apparent that while the first gripper 301 is operating on a first sub-assembly, the second gripper 302 is operating on a first preceding sub-assembly, i.e., on a first sub-assembly preceding it in the assembly line and which already underwent the insertion of pin 42 in the pin seat 430, and the third gripper 303 on a further preceding first sub-assembly, which already underwent the insertion of pin 42 in the pin seat 430 and the greasing of such a seat in the greasing station 6.

Accordingly, the three grippers 301, 302, 303 are advantageously suitable for operating simultaneously on three separate sub-assemblies, thus increasing the productivity of the assembly station.

In an embodiment of the present invention, with reference to the example of hinge 4, the second sub-assembly comprises a connecting rod 43 and a spring 44 and the second pre-assembly group 92 is suitable for pre-assembling said connecting rod 43 and said spring 44 to form the second sub-assembly 434.

Preferably, the second pre-assembly group 92 is fed with each connecting rod 43 and with each spring 44 by a connecting rod feeding device 903 and a spring feeding device 904, respectively.

To this end, the second pre-assembly group 92 is suitable for handling the connecting rod 43 and spring 44 so as to assemble spring 44 in the connecting rod 43 to form the second sub-assembly 434.

In an embodiment, the feeding devices 903 and 904 are followed by a respective transport guide 913, 914, each transport guide 913, 914 being suitable for bringing the respective component 43, 44 to a respective picking zone.

In a variant, the second pre-assembly group 92 further comprises a respective greasing station for distributing grease in spring 44, preferably placed in the picking zone of the spring itself.

In an advantageous embodiment, the second manipulator arm 2 is suitable both for applying spring 44 to the connecting rod 43 and for picking the second pre-assembled sub-assembly 434 and assembling it together with the first sub-assembly 412.

In a preferred embodiment, in particular, the second manipulator arm 2 is suitable for picking a spring 44 from the picking zone and placing it in the connecting rod 43.

In a constructional variant, the second manipulator arm 2 comprises a first gripper 201, sustained by a gripper-holder group 20. Such a first gripper 201 is suitable for being actuated to open and close so as to grab the spring 44 in the picking zone and transport it and position it in the connecting rod 43.

Moreover, in a preferred embodiment, the second manipulator arm 2 comprises two grippers, i.e., the first gripper 201 described above, and a second gripper 202, which are sustained by the gripper-holder group 20.

In an embodiment, the first gripper 201 and the second gripper 202 are not integral with each other during motion.

As illustrated above, the first gripper 201 is suitable for picking spring 44 and positioning it in the connecting rod 43.

As already mentioned for the general embodiment with respect to a third component 43 and a fourth component 44, the second gripper 202 is suitable for picking the second sub-assembly 434 and assembling it together with the first sub-assembly 412.

Preferably, the two grippers 201 and 202 are suitable for acting simultaneously on two consecutive sub-assemblies 434. It is apparent that each gripper 201, 202 operates on the same second sub-assembly 434 and/or on the components 43, 44 thereof, i.e., in such an embodiment, on the connecting rod 43 and on spring 44, in series.

Moreover, in an advantageous embodiment, the first manipulator arm 1 is suitable for picking the first sub-assembly 412 from the rotary table 5.

In a constructional variant, the first manipulator arm 1 comprises a gripper 101 suitable for opening and closing to grab the first sub-assembly 412 to bring it to the mutual assembly position and assemble it together with a second sub-assembly 434.

In a preferred embodiment, each manipulator arm 1, 2, 3 comprises a guiding wall 12, 22, 32 in which a guiding groove 120, 220, 320 is obtained. Each guiding groove is suitable for guiding the movement of a respective gripper according to the functionalities described in the aforesaid documents.

Moreover, each manipulator arm 1, 2, 3 preferably comprises at least one gripper 101, 201, 301.

In a preferred embodiment, the assembly plant 9 comprises a respective actuation group 13, 23, 33 for each manipulator arm 1, 2, 3, suitable for actuating the movement of each manipulator arm 1, 2, 3.

In an advantageous embodiment, the first manipulator arm 1 and the second manipulator arm 2 are suitable for picking the first sub-assembly 412 and the second sub-assembly 434, respectively, and keeping them suspended, avoiding all contact with any support other than said first 1 and second 2 manipulator arms.

In an advantageous variant, the first manipulator arm 1 and the second manipulator arm 2 are suitable for assembling the first sub-assembly 412 and the second sub-assembly 434 to each other to obtain a joint assembly 402.

In an advantageous embodiment, said first and second manipulator arms 1, 2 are suitable for assembling such sub-assemblies 412, 434 in a suspended-in-air position, i.e., "flying", that is, avoiding all contact with any support other than said first and second manipulator arms 1, 2, to form a joint assembly 402.

In an embodiment, considering the receiving component 401 (according to the example of the hinge, wing 401) placed on the grabbing device 70, the assembly of the sub-assemblies described above occurs at a given distance along the vertical direction Z from said receiving component 401.

I.e., the receiving seat 40 is suitable for accommodating the sub-assemblies only once they have been assembled in the air, at a given distance from said seat 40. Or, in other words, the assembly plant 9 is suitable for bringing the joint assembly 402 to the receiving seat 40 only once such a joint assembly 402 has already been assembled.

Moreover, according to an advantageous embodiment, following the assembly of the joint assembly 402, the first manipulator arm 1 and the second manipulator arm 2 are suitable for translating towards the receiving component 401, dragging with them the joint assembly 402 previously assembled in the air, to position it in the receiving seat 40.

Preferably, said first and second manipulator arms 1, 2 are suitable for translating towards the receiving seat 40 along the vertical direction Z.

In a preferred embodiment, the first manipulator arm 1 comprises a first arm constraining portion, and in which the second manipulator arm 2 comprises a second arm constraining portion, said first and second arm constraining portions being mutually engageable for constraining said first manipulator arm 1 and said second manipulator arm 2 to each other.

In an advantageous embodiment, the assembly plant 9 comprises a respective actuation group 13, 23 for each manipulator arm 1, 2. The electronic control unit is suitable for actuating only one of said actuation units 13, 23 to generate the integral translation of both said first and second manipulator arms 1, 2 towards the receiving seat 40.

I.e., in such an advantageous embodiment, only one of the manipulator arms 1, 2 is actuated with power in translation towards the receiving seat 40. The inactive manipulator arm undergoes the translation due to the dragging by the active manipulator arm by virtue of the temporary constraint obtained by means of the respective constraining portions of each manipulator arm.

In an embodiment, such constraining portions are obtained in the respective grippers 101, 202 of said first and second manipulator arms 1, 2.

In an embodiment, the respective constraining portions of said first and second manipulator arms 1, 2 are suitable for switching from an engaged configuration to a disengaged configuration, and vice versa, according to the operating needs of the assembly station.

In a preferred embodiment, the first manipulator arm 1 and the second manipulator arm 2 are suitable for moving in translation integrally along a vertical direction Z perpendicular to the work surface 700, to translate the joint assembly 402 vertically towards the receiving seat 40 of the receiving component 401.

It is apparent that, as described at the beginning of the present disclosure, in the example of hinge 4, said first and second manipulator arms 1, 2 are suitable for positioning the joint assembly 402 in the receiving seat 40 so that the respective hole axes W1, W2, W3 of damper 41, of the connecting rod 43 and of spring 44, are aligned with the rivet insertion axis Y of the hole of wing 401.

Moreover, in an embodiment of the present invention, the assembly plant 9 comprises a riveting apparatus 8 comprising a riveting machine 81.

In a preferred variant, the riveting apparatus 8 is placed at the assembly station in which wing 401 is placed in stationary status, and in particular, the riveting machine 81 is arranged, with respect to wing 401, in an aligned manner with respect to the rivet insertion axis Y.

Preferably, the riveting apparatus 8 has the same structural and functional features illustrated in documents WO2018/029563 and WO2020/121102A1 to the Applicant.

The riveting machine 81 is suitable for inserting a rivet 45 in wing 401 and in the joint assembly 402 along the rivet insertion axis Y so as to connect the joint assembly 402 and wing 401 in an articulated manner.

In an embodiment of the invention, the assembly plant 9 comprises detection means suitable for detecting a station status and transmit a working signal or a stop signal to the electronic control unit to stop or actuate, respectively, the assembly plant 9.

In particular, such detection means comprise a first sensor suitable for detecting the presence of a provision of components along each transport guide 911, 912, 913, 914.

Moreover, preferably such detection means comprise a second sensor suitable for detecting if the provision of components along each transport guide 911, 912, 913, 914 is sufficient to push the respective component to the correct position in the loading zone to be picked by the respective manipulator arm.

Moreover, in an embodiment, the detection means comprise a third sensor, preferably placed at an end of one or more of the transport guides 911, 912, 913, 914, said sensor being suitable for detecting the presence, in the respective picking zone c, of the component which is to be picked by the respective manipulator arm.

In the most complete embodiment, the method for assembling multicomponent items according to the embodiment in which the multicomponent item 4 is a hinge, consists of the following steps:
I) providing an assembly plant 9 according to the present invention;
II) feeding a first pre-assembly group 91 with a damper 41 and a pin 42, and feeding a second pre-assembly group 92 with a connecting rod 43 and a spring 44;
III) assembling, in the first pre-assembly group 91, damper 41 and pin 42 to each other to form a first sub-assembly 412;
IV) assembling, in the second pre-assembly group 92, the connecting rod 43 and spring 44 to each other to form a second sub-assembly 434;
V) bringing, by means of a first manipulator arm 1 and a second manipulator arm 2, the first sub-assembly 412 and the second sub-assembly 434, respectively, to a suspended-in-air position;
VI) assembling, in said suspended-in-air position, the first sub-assembly 412 with the second sub-assembly 434 to form a joint assembly 402;
VII) providing a grabbing device 70 on which a wing 401 is preferably positioned in stationary status comprising a receiving seat 40 suitable for accommodating the joint assembly 402;
VIII) actuating the first manipulator arm 1 and the second manipulator arm 2 integrally in translation towards the receiving seat 40 and positioning the joint assembly 402 in the receiving seat 40 so as to form one or more rivet insertion seats suitable for engaging one or more rivets 45;
IX) providing a riveting apparatus 8 at the grabbing device 70 in stationary status, said riveting apparatus 8 comprising a riveting machine 81, and feeding said riveting apparatus 8 with one or more rivets 45;
X) connecting, by means of the riveting machine 81, the joint assembly 402 and wing 401 in an articulated manner by means of the insertion of said one or more rivets 45 in said one or more rivet insertion seats in the joint assembly 402 and in wing 401.

Preferably, steps I) to X) of the method occur all in the same assembly plant 9 and while wing 401 is in a stationary status.

In other words, in an embodiment, when the assembly plant 9 is inserted in an assembly line, the grabbing device 70 is actuated in translation along the feeding direction X only once wing 401 has been connected in an articulated manner with the joint assembly 402 by means of the insertion of one or more rivets 45.

The present invention also relates to an assembly line comprising an assembly plant 9 according to the present invention.

Preferably, the assembly plant 9 of the assembly line is suitable for implementing the assembly method according to the present invention.

In an advantageous embodiment, the assembly line comprises a transport system suitable for allowing the advancement of a sequence of grabbing devices 70, preferably of pallets 70, along a feeding direction X parallel to the work surface 700.

It is apparent that in an embodiment, the assembly line is suitable for producing a plurality of multicomponent items 4. According to such an embodiment, such a transport system is suitable for allowing the advancement along said advancing axis X of a sequence of grabbing devices 70, each suitable for transporting at least one receiving component 401.

Therefore, in a preferred embodiment, each grabbing device 70 is suitable for being stopped to bring the respective receiving component 401 in a stationary status at the assembly station and to remain in such a stationary status when performing each assembly operation implemented in the assembly plant 9.

Moreover, in an embodiment, the assembly line comprises an electronic control unit suitable for sending a stop signal to such a transport system so that the transport system allows the grabbing device 70 to stop at the assembly station so as to keep the respective receiving component 401 in stationary status, according to said stop signal.

According to an embodiment, the electronic control unit is suitable for sending a restart signal to said transport system.

Preferably, the restart signal is sent only at the end of the assembly operations in the assembly station, i.e., for example, only at the end of the assembly of the multicomponent item 4 in said assembly plant 9, so that the transport system activates the advancement of the grabbing device 70 to bring the receiving component 401 out of the stationary status and along the advancing axis X only once the assembly of the at least two sub-assemblies 412, 434 to the receiving component 401 in the assembly station is complete.

Innovatively, the present invention solves the conventional drawbacks of the background art.

Advantageously, the assembly station according to the present invention allows the assembly operations of a multicomponent item to be accelerated.

Moreover, advantageously the assembly station, the assembly method and the assembly line according to the present invention simplify the assembly operations of a multicomponent item and ensure an increase in the production volumes of the assembly line in which they are inserted with respect to known assembly lines, time being equal.

According to a further advantage, the assembly station according to the present invention increases the flexibility of the assembly line in which it is inserted. Indeed, advantageously, providing an assembly station suitable for allowing assembling a plurality of accessory components in a single station allows adapting the assembly line to constructional variants of the final multicomponent item, intervening only on the sub-steps of the assembly, without acting on the development of the main line.

It is apparent that in order to meet specific needs, those skilled in the art could make variations to the embodiments of the aforesaid assembly station or replace elements with others which are functionally equivalent.

Such variations are also contained within the scope of protection as defined by the following claims. Moreover, each variation described as belonging to a possible embodiment can be implemented irrespective of the other variations described.

## Claims

1. A method for assembling sub-assemblies (412, 434) to a receiving component (401) in an assembly plant (9), the sub-assemblies (412, 434) being suitable for being assembled to each other to form a joint assembly (402), and the receiving component (401) comprising a receiving seat (40) suitable for accommodating said joint assembly (402);
wherein said method comprises the following steps:
a) providing, in said assembly plant (9), at least one assembly station, one or more sub-stations (91, 92) proximal to said assembly station, and at least one assembly device (1), wherein a receiving component (401) temporarily stops in said assembly station;
b) picking, by means of said at least one assembly device (1), at least two sub-assemblies (412, 434) from said one or more sub-stations (91, 92) of said assembly plant (9);
c) keeping said receiving component (401) in stationary status at least during the successive step of the method;
d) assembling, by means of said at least one assembly device (1), said at least two sub-assemblies (412, 434) with said receiving component (401);
wherein in the stationary status, the receiving component (401) remains in the same assembly status and/or in the same position and/or does not undergo other operations until it receives said at least two sub-assemblies (412, 434),
said method for assembling sub-assemblies being **characterized in that** step b) of the method comprises the following sub-steps:
b1) picking, by means of said at least one assembly device (1), the first sub-assembly (412) and the second sub-assembly (434) and bringing them to a mutual assembly position, wherein said first sub-assembly (412) is in an assembly position with said second sub-assembly (434);
b2) assembling, by means of said at least one assembly device (1), the first sub-assembly (412) with the second sub-assembly (434) in spaced apart manner with respect to the receiving component (401), for forming a joint assembly (402);
and wherein step d) of the method consists in moving said at least one assembly device (1) towards the receiving seat (40) for bringing said joint assembly (402) to the receiving seat (40) and assembling the joint assembly (402) with the receiving component (401) .

2. Assembly method according to claim 1, wherein also step b) occurs while the receiving component (401) is kept in stationary status.

3. Assembly method according to any one of the preceding claims, wherein the first sub-assembly (412) comprises at least a first (41) and a second component (42), and the second sub-assembly (434) comprises at least a third component (43) and a fourth component (44),
wherein the sub-stations (91, 92) comprise a first pre-assembly group (91) and a second pre-assembly group (92), respectively,
and wherein the method comprises, prior to step b), the following steps:
a1) assembling at least a first component (41) and a second component (42) to each other in the first pre-assembly group (91) for forming the first sub-assembly (412);
a11) assembling at least a third component (43) and a fourth component (44) to each other in the second pre-assembly group (92) for forming the second sub-assembly (434) .

4. Assembly method according to the preceding claim, wherein also steps a1) and a11) occur while the receiving component (401) is kept in stationary status.

5. Assembly method according to any one of the preceding claims, wherein steps b1) and b2) are performed while keeping the first sub-assembly (412) and the second sub-assembly (434) in suspended-in-air position, that is avoiding contact with any support other than said at least one assembly device (1).

6. Assembly method according to any one of the preceding claims, wherein the at least one assembly device (1) comprises a first manipulator arm (1) and a second manipulator arm (2),
and wherein during step b), the first manipulator arm (1) picks the first sub-assembly (412) and the second manipulator arm (2) picks the second sub-assembly (434), and said manipulator arms (1, 2) cooperate for mutually assembling said first and second sub-assemblies (412, 434) for forming a joint assembly (402), and during step d), at least one of said first and second manipulator arms (1, 2) is moved to bring said joint assembly (402) in assembly with the receiving component (401),
and wherein the receiving component (401) remains in stationary status during step b), that is it does not undergo assembly operations during the mutual assembly between the first and second sub-assembly (412, 434).

7. Assembly method according to any one of the preceding claims, comprising step a2) of providing a grabbing device (70), for example, a pallet (70) or a rotating table, located on a work surface (700) which is substantially parallel to a ground surface, on which the receiving component (401) is positioned in such a manner that step d) consists in positioning said at least two sub-assemblies (412, 434) from the top in the receiving component (401) in stationary status, and in the assembly of said sub-assemblies (412, 434) with the receiving component (401).

8. Assembly method according to claim 7, wherein the receiving component (401) is positioned on the grabbing device (70) with the receiving seat (40) facing upwards, that is on the opposite side with respect to the work surface (700),
and wherein during step d), the assembly device (1) translates towards the receiving seat (40) at least along a vertical direction (Z), perpendicular to said work surface (700), for placing from the top the joint assembly (402) in the receiving seat (40).

9. Assembly method according to claims 6 and 8, wherein step d) consists of the synchronous descent of each manipulator arm (1, 2) along said vertical direction (Z) towards said grabbing device (70) and in the placement, from the top, of the joint assembly (402) in the receiving seat (40).

10. Assembly method according to any one of the preceding claims, wherein when assembled, the at least two sub-assemblies (412, 434) and the receiving component (401) form one or more rivet insertion seats suitable for receiving one or more rivets (45) for connecting said at least two sub-assemblies (412, 434) in articulated manner to the receiving component (401), and wherein the assembly method comprises, after step d), the following operating steps:
h) providing a riveting apparatus (8) comprising a riveting machine (81), and feeding said riveting apparatus (8) with one or more rivets (45);
i) connecting, by means of said riveting machine (81), the at least two sub-assemblies (412, 434) in articulated manner to the receiving component (401) by means of the insertion of said one or more rivets (45) in said one or more rivet insertion seats.

11. Assembly method according to any one of claims 7 to 10, wherein the receiving component (401) is kept in the stationary status by keeping the grabbing device (70) in the same position, preferably temporarily immobile, at the assembly station, while the steps of the method according to one or more of the preceding claims occur.

12. An assembly plant (9) for assembling multicomponent items (4) starting from a first sub-assembly (412), a second sub-assembly (434) and a receiving component (401), wherein the first sub-assembly (412) and the second sub-assembly (434) are suitable for being assembled to each other for forming a joint assembly (402),
said assembly plant (9) comprising:
- at least one assembly station;
- one or more sub-stations (91, 92) proximal to said assembly station;
- at least one assembly device suitable for picking at least two sub-assemblies (412, 434) from said one or more sub-stations (91, 92) of the plant and for assembling them in the assembly station with a receiving component (401),
- a grabbing device (70) on which a receiving component (401), having a receiving seat (40) suitable for receiving said joint assembly (402) formed by said first sub-assembly (412) and said second sub-assembly (434), is accommodable,
and **characterized in that** the at least one assembly device comprises a first manipulator arm (1) and a second manipulator arm (2) suitable for assembling said sub-assemblies (412, 434) for forming the joint assembly (402) in spaced apart manner with respect to the receiving component (401) and suitable for bringing said joint assembly (402) to the receiving seat (40) of said receiving component (401),
and wherein the receiving component (401) is suitable for remaining in stationary status during the assembly of the joint assembly (402) and at least until the joint assembly (402) is placed in the receiving seat (40),
said assembly plant (9) being configured to perform the assembly method according to any one of the preceding claims.

13. Assembly plant (9) according to claim 12, wherein said one or more sub-stations (91, 92) comprise a first pre-assembly group (91) suitable for pre-assembling a first component (41) and a second component (42) for making the first sub-assembly (412), and a second pre-assembly group (92) suitable for pre-assembling a third component (43) and a fourth component (44) for making the second sub-assembly (434), and wherein the receiving component (401) is suitable for remaining in the stationary status also during the pre-assembly of said first and second sub-assemblies (412, 434).

14. Assembly plant (9) according to claim 12 or 13, wherein the grabbing device (70) is positioned on a work surface (700) parallel to a ground surface and wherein the first (1) and second manipulator arm (2) are suitable for mutually integrally translating along a vertical direction (Z) perpendicular to said work surface (700).

15. Assembly plant (9) according to claim 12 or 13 or 14, wherein the grabbing device (70) comprises a support seat (71) suitable for firmly accommodating a receiving component (401) in such a manner that the receiving seat (40) faces upwards, that is, on the opposite side with respect to the work surface (700).

16. An assembly line comprising an assembly plant (9) according to any one of claims 12 to 15.

17. Assembly line according to the preceding claim and comprising:
- a transport system suitable for allowing the advancement, along an advancing axis (X) parallel to the ground surface, of a succession of pallets (70) each suitable for transporting at least one receiving component (401);
- an electronic control unit suitable for sending a stop signal to said transport system so that the transport system allows the grabbing device (70) to stop at the assembly station so as to keep the respective receiving component in stationary status,
and said electronic control unit being suitable for sending a restart signal to said transport system only at the end of the assembly operations in the assembly station so that the transport system activates the advancement of the grabbing device (70) for bringing the receiving component (401) out of the stationary status and along the advancing axis (X) only once the assembly of the at least two sub-assemblies (412, 434) with the receiving component (401) in the assembly station is complete.

## Patentansprüche

1. Verfahren zum Montieren Unterbaugruppen (412, 434) an eine Aufnahmekomponente (401) in einer Montageanlage (9), wobei die Unterbaugruppen (412, 434) geeignet sind, miteinander montiert zu werden, um eine Gesamtbaugruppe (402) zu bilden, und die Aufnahmekomponente (401) umfassend einen Aufnahmesitz (40), der geeignet ist, die Gesamtbaugruppe (402) aufzunehmen;
wobei das genannte Verfahren die folgenden Schritte umfasst:
a) Bereitstellen, in der Montageanlage (9), mindestens einer Montagestation, einer oder mehrerer Unterstationen (91, 92), die proximal zu der Montagestation sind, und mindestens einer Montagevorrichtung (1), wobei eine Aufnahmekomponente (401) in der Montagestation vorübergehend anhält;
b) Nehmen, mittels der mindestens einen Montagevorrichtung (1), mindestens zwei Unterbaugruppen (412, 434) aus der einen oder mehreren Unterstationen (91, 92) der Montageanlage (9);
c) Halten der Aufnahmekomponente (401) in einem unbeweglichen Zustand mindestens während des nachfolgenden Schrittes des Verfahrens;
d) Montieren, mittels der mindestens einen Montagevorrichtung (1), der mindestens zwei Unterbaugruppen (412, 434) mit der Aufnahmekomponente (401);
wobei in dem unbeweglichen Zustand die Aufnahmekomponente (401) in dem gleichen Montagezustand und/oder in der gleichen Position verbleibt und/oder keinen anderen Vorgängen unterzogen wird, bis sie die mindestens zwei Unterbaugruppen (412, 434) erhält,
wobei das Verfahren zum Montieren Unterbaugruppen **dadurch gekennzeichnet ist, dass** Schritt b) des Verfahrens die folgenden Unterschritte umfasst:
b1) Nehmen, mittels der mindestens einen Montagevorrichtung (1), der ersten Unterbaugruppe (412) und der zweiten Unterbaugruppe (434) und Bringen derselben in eine gegenseitige Montageposition, wobei sich die erste Unterbaugruppe (412) in einer Montageposition mit der zweiten Unterbaugruppe (434) befindet;
b2) Montieren, mittels der mindestens einen Montagevorrichtung (1), der ersten Unterbaugruppe (412) mit der zweiten Unterbaugruppe (434) beabstandet in Bezug auf die Aufnahmekomponente (401), um eine Gesamtbaugruppe (402) zu bilden;
und wobei Schritt d) des Verfahrens darin besteht, die mindestens eine Montagevorrichtung (1) zu dem Aufnahmesitz (40) zu bewegen, um die Gesamtbaugruppe (402) zu dem Aufnahmesitz (40) zu bringen und die Gesamtbaugruppe (402) mit der Aufnahmekomponente (401) zu montieren.

2. Montageverfahren nach Anspruch 1, wobei auch Schritt b) erfolgt, während die Aufnahmekomponente (401) in dem unbeweglichen Zustand gehalten wird.

3. Montageverfahren nach einem der vorhergehenden Ansprüche, wobei die erste Unterbaugruppe (412) mindestens eine erste (41) und eine zweite Komponente (42) umfasst und die zweite Unterbaugruppe (434) mindestens eine dritte Komponente (43) und eine vierte Komponente (44) umfasst,
wobei die Unterstationen (91, 92) jeweils eine erste Vormontagegruppe (91) und eine zweite Vormontagegruppe (92) umfassen,
und wobei das Verfahren vor Schritt b) die folgenden Schritte umfasst:
a1) Montieren mindestens einer ersten Komponente (41) und einer zweiten Komponente (42) miteinander in der ersten Vormontagegruppe (91) zur Bildung der ersten Unterbaugruppe (412);
a11) Montieren mindestens einer dritten Komponente (43) und einer vierten Komponente (44) miteinander in der zweiten Vormontagegruppe (92) zur Bildung der zweiten Unterbaugruppe (434).

4. Montageverfahren nach dem vorhergehenden Anspruch, wobei auch die Schritte a1) und a1l) erfolgen, während die Aufnahmekomponente (401) in dem unbeweglichen Zustand gehalten wird.

5. Montageverfahren nach einem der vorhergehenden Ansprüche, wobei die Schritte b1) und b2) ausgeführt werden, während die erste Unterbaugruppe (412) und die zweite Unterbaugruppe (434) in einer in der Luft suspendierten Position gehalten werden, d.h. indem ein Kontakt mit irgendeiner anderen Stütze als der mindestens einen Montagevorrichtung (1) vermieden wird.

6. Montageverfahren nach einem der vorhergehenden Ansprüche, wobei die mindestens eine Montagevorrichtung (1) einen ersten Manipulatorarm (1) und einen zweiten Manipulatorarm (2) umfasst,
und wobei während Schritt b) der erste Manipulatorarm (1) die erste Unterbaugruppe (412) nimmt und der zweite Manipulatorarm (2) die zweite Unterbaugruppe (434) nimmt, und die Manipulatorarme (1, 2) zusammenwirken, um die erste und die zweite Unterbaugruppe (412, 434) gegenseitig zu montieren, um eine Gesamtbaugruppe (402) zu bilden, und wobei während Schritt d) mindestens einen der ersten und zweiten Manipulatorarme (1, 2) bewegt wird, um die Gesamtbaugruppe (402) in Montage mit der Aufnahmekomponente (401) zu bringen,
und wobei die Aufnahmekomponente (401) während Schritt b) in dem unbeweglichen Zustand verbleibt, d.h. sie keinen Montagevorgängen während der gegenseitigen Montage zwischen der ersten und der zweiten Unterbaugruppe (412, 434) unterzogen wird.

7. Montageverfahren nach einem der vorhergehenden Ansprüche, umfassend Schritt a2) von Bereitstellen einer Greifvorrichtung (70), beispielsweise einer Palette (70) oder eines Drehtisches, die auf einer Arbeitsfläche (700) angeordnet ist, die im Wesentlichen parallel zu einer Bodenfläche ist, auf der die Aufnahmekomponente (401) positioniert wird, sodass Schritt d) darin besteht, die mindestens zwei Unterbaugruppen (412, 434) von oben in die Aufnahmekomponente (401) in dem unbeweglichen Zustand zu positionieren und die Unterbaugruppen (412, 434) mit der Aufnahmekomponente (401) zu montieren.

8. Montageverfahren nach Anspruch 7, wobei die Aufnahmekomponente (401) auf der Greifvorrichtung (70) mit dem Aufnahmesitz (40) positioniert ist, der nach oben gerichtet wird, d.h. auf der gegenüberliegenden Seite in Bezug auf die Arbeitsfläche (700),
und wobei während Schritt d) die Montagevorrichtung (1) sich mindestens entlang einer vertikalen Richtung (Z), die senkrecht zu der Arbeitsfläche (700) ist, zu dem Aufnahmesitz (40) verschiebt, um die Gesamtbaugruppe (402) von oben in den Aufnahmesitz (40) zu positionieren.

9. Montageverfahren nach den Ansprüchen 6 und 8, wobei Schritt d) in dem synchronen Absenken jedes Manipulatorarms (1, 2) entlang der vertikalen Richtung (Z) zu der Greifvorrichtung (70) und in dem Positionieren von oben der Gesamtbaugruppe (402) in den Aufnahmesitz (40) besteht.

10. Montageverfahren nach einem der vorhergehenden Ansprüche, wobei, wenn montiert, die mindestens zwei Unterbaugruppen (412, 434) und die Aufnahmekomponente (401) einen oder mehrere Nieteinführungssitze bilden, die geeignet sind, einen oder mehrere Niete (45) aufzunehmen, um die mindestens zwei Unterbaugruppen (412, 434) gelenkig mit der Aufnahmekomponente (401) zu verbinden, und wobei das Montageverfahren nach Schritt d) die folgenden Betriebsschritte umfasst:
h) Bereitstellen einer Nietvorrichtung (8) umfassend eine Nietmaschine (81), und Zuführen der Nietvorrichtung (8) mit einem oder mehreren Nieten (45);
i) Verbinden, mittels der Nietmaschine (81), der mindestens zwei Unterbaugruppen (412, 434) gelenkig mit der Aufnahmekomponente (401) mittels dem Einführen des einen oder mehreren Niete (45) in die einen oder mehreren Nieteinführungssitze.

11. Montageverfahren nach einem der Ansprüche 7 bis 10, wobei die Aufnahmekomponente (401) in dem unbeweglichen Zustand gehalten wird, indem die Greifvorrichtung (70) in der gleichen Position, vorzugsweise vorübergehend unbeweglich, an der Montagestation gehalten wird, während die Schritte des Verfahrens gemäß einem oder mehreren der vorhergehenden Ansprüche erfolgen.

12. Montageanlage (9) zum Montieren von Mehrkomponentenartikeln (4) ausgehend von einer ersten Unterbaugruppe (412), einer zweiten Unterbaugruppe (434) und einer Aufnahmekomponente (401), wobei die erste Unterbaugruppe (412) und die zweite Unterbaugruppe (434) geeignet sind, miteinander montiert zu werden, um eine Gesamtbaugruppe (402) zu bilden,
die Montageanlage (9) umfassend:
- mindestens eine Montagestation;
- eine oder mehrere Unterstationen (91, 92), die sich proximal zu der Montagestation befinden;
- mindestens eine Montagevorrichtung, die geeignet ist, mindestens zwei Unterbaugruppen (412, 434) aus der einen oder mehreren Unterstationen (91, 92) der Anlage zu nehmen und diese in der Station mit einer Aufnahmekomponente (401) zu montieren,
- eine Greifvorrichtung (70), auf der eine Aufnahmekomponente (401), die einen Aufnahmesitz (40) aufweist, der geeignet ist, die Gesamtbaugruppe (402) aufzunehmen, die durch die erste Unterbaugruppe (412) und die zweite Unterbaugruppe (434) gebildet wird, aufgenommen werden kann,
und **dadurch gekennzeichnet, dass**
die mindestens eine Montagevorrichtung einen ersten Manipulatorarm (1) und einen zweiten Manipulatorarm (2) umfasst, die geeignet sind, die Unterbaugruppen (412, 434) zu montieren, um die Gesamtbaugruppe (402) beabstandet in Bezug auf die Aufnahmekomponente (401) zu bilden, und die geeignet sind, die Gesamtbaugruppe (402) zu dem Aufnahmesitz (40) der Aufnahmekomponente (401) zu bringen,
und wobei die Aufnahmekomponente (401) geeignet ist, während der Montage der Gesamtbaugruppe (402) und mindestens bis die Gesamtbaugruppe (402) in den Aufnahmesitz (40) positioniert wird, in dem unbeweglichen Zustand zu verbleiben,
wobei die Montageanlage (9) dazu konfiguriert ist, das Montageverfahren nach einem der vorhergehenden Ansprüche auszuführen.

13. Montageanlage (9) nach Anspruch 12, wobei die eine oder mehrere Unterstationen (91, 92) eine erste Vormontagegruppe (91) umfassen, die geeignet ist, eine erste Komponente (41) und eine zweite Komponente (42) vorzumontieren, um die erste Unterbaugruppe (412) zu bilden, und eine zweite Vormontagegruppe (92), die geeignet ist, eine dritte Komponente (43) und eine vierte Komponente (44) vorzumontieren, um die zweite Unterbaugruppe (434) zu bilden, und wobei die Aufnahmekomponente (401) geeignet ist, auch während der Vormontage der ersten und zweiten Unterbaugruppen (412, 434) in dem unbeweglichen Zustand zu verbleiben.

14. Montageanlage (9) nach Anspruch 12 oder 13, wobei die Greifvorrichtung (70) auf einer Arbeitsfläche (700) positioniert wird, die parallel zu einer Bodenfläche ist, und wobei der erste (1) und der zweite Manipulatorarm (2) geeignet sind, sich gemeinsam entlang einer vertikalen Richtung (Z), die senkrecht zu der Arbeitsfläche (700) ist, zu verschieben.

15. Montageanlage (9) nach Anspruch 12 oder 13 oder 14, wobei die Greifvorrichtung (70) einen Tragsitz (71) umfasst, der geeignet ist, eine Aufnahmekomponente (401) fest aufzunehmen, sodass der Aufnahmesitz (40) nach oben gerichtet ist, d.h. auf der gegenüberliegenden Seite in Bezug auf die Arbeitsfläche (700).

16. Montagelinie umfassend eine Montageanlage (9) nach einem der Ansprüche 12 bis 15.

17. Montagelinie nach dem vorhergehenden Anspruch und umfassend:
- ein Transportsystem, das geeignet ist, den Vorschub entlang einer Vorschubsachse (X), die parallel zu der Bodenfläche ist, einer Abfolge von Paletten (70) zu ermöglichen, die jeweils geeignet sind, mindestens eine Aufnahmekomponente (401) zu transportieren;
- eine elektronische Steuereinheit, die geeignet ist, ein Stoppsignal an das Transportsystem zu senden, sodass das Transportsystem der Greifvorrichtung (70) ermöglicht, an der Montagestation anzuhalten, um die jeweilige Aufnahmekomponente in dem unbeweglichen Zustand zu halten,
und wobei die elektronische Steuereinheit geeignet ist, ein Neustartsignal an das Transportsystem erst am Ende der Montagevorgänge in der Montagestation zu senden, sodass das Transportsystem den Vorschub der Greifvorrichtung (70) aktiviert, um die Aufnahmekomponente (401) aus dem unbeweglichen Zustand herauszubringen und entlang der Vorschubsachse (X) zu bringen, nur wenn die Montage der mindestens zwei Unterbaugruppen (412, 434) mit der Aufnahmekomponente (401) in der Montagestation abgeschlossen ist.

## Revendications

1. Procédé d'assemblage de sous-ensembles (412, 434) à un composant récepteur (401) dans une installation d'assemblage (9), les sous-ensembles (412, 434) étant aptes à être assemblés l'un à l'autre pour former un ensemble joint (402), et le composant récepteur (401) comprenant un siège de réception (40) apte à recevoir ledit ensemble joint (402) ;
dans lequel ledit procédé comprend les étapes suivantes :
a) fournir, dans ladite installation d'assemblage (9), au moins un poste d'assemblage, un ou plusieurs sous-postes (91, 92) proximaux audit poste d'assemblage, et au moins un dispositif d'assemblage (1), dans lequel un composant récepteur (401) s'arrête temporairement dans ledit poste d'assemblage ;
b) prendre, au moyen dudit au moins un dispositif d'assemblage (1), au moins deux sous-ensembles (412, 434) depuis ledit un ou plusieurs sous-postes (91, 92) de ladite installation d'assemblage (9) ;
c) maintenir ledit composant récepteur (401) en état stationnaire au moins pendant l'étape successive du procédé ;
d) assembler, au moyen dudit au moins un dispositif d'assemblage (1), lesdits au moins deux sous-ensembles (412, 434) avec ledit composant récepteur (401) ;
dans lequel, en état stationnaire, le composant récepteur (401) demeure dans le même état d'assemblage et/ou dans la même position et/ou ne subit pas d'autres opérations jusqu'à ce qu'il reçoive lesdits au moins deux sous-ensembles (412, 434),
ledit procédé d'assemblage de sous-ensembles étant **caractérisé en ce que** l'étape b) du procédé comprend les sous-étapes suivantes :
b1) prendre, au moyen dudit au moins un dispositif d'assemblage (1), le premier sous-ensemble (412) et le second sous-ensemble (434) et les amener dans une position d'assemblage mutuelle,
dans laquelle ledit premier sous-ensemble (412) est dans une position d'assemblage avec ledit second sous-ensemble (434) ;
b2) assembler, au moyen dudit au moins un dispositif d'assemblage (1), le premier sous-ensemble (412) avec le second sous-ensemble (434) de manière espacée par rapport au composant récepteur (401), pour former un ensemble joint (402) ;
et dans lequel l'étape d) du procédé consiste à déplacer ledit au moins un dispositif d'assemblage (1) vers le siège de réception (40) pour amener ledit ensemble joint (402) au siège de réception (40) et assembler l'ensemble joint (402) avec le composant récepteur (401).

2. Procédé d'assemblage selon la revendication 1, dans lequel également l'étape b) a lieu tandis que le composant récepteur (401) est maintenu en état stationnaire.

3. Procédé d'assemblage selon l'une quelconque des revendications précédentes, dans lequel le premier sous-ensemble (412) comprend au moins un premier (41) et un second composant (42), et le second sous-ensemble (434) comprend au moins un troisième composant (43) et un quatrième composant (44),
dans lequel les sous-postes (91, 92) comprennent respectivement un premier groupe de pré-assemblage (91) et un second groupe de pré-assemblage (92),
et dans lequel le procédé comprend, avant l'étape b), les étapes suivantes :
a1) assembler au moins un premier composant (41) et un second composant (42) l'un à l'autre dans le premier groupe de pré-assemblage (91) pour former le premier sous-ensemble (412) ;
a1l) assembler au moins un troisième composant (43) et un quatrième composant (44) l'un à l'autre dans le second groupe de pré-assemblage (92) pour former le second sous-ensemble (434).

4. Procédé d'assemblage selon la revendication précédente, dans lequel également les étapes a1) et a1l) ont lieu tandis que le composant récepteur (401) est maintenu en état stationnaire.

5. Procédé d'assemblage selon l'une quelconque des revendications précédentes, dans lequel les étapes b1) et b2) sont exécutées en maintenant le premier sous-ensemble (412) et le second sous-ensemble (434) en position suspendue dans l'air, c'est-à-dire en évitant le contact avec tout support autre que ledit au moins un dispositif d'assemblage (1).

6. Procédé d'assemblage selon l'une quelconque des revendications précédentes, dans lequel ledit au moins un dispositif d'assemblage (1) comprend un premier bras manipulateur (1) et un second bras manipulateur (2),
et dans lequel pendant l'étape b), le premier bras manipulateur (1) prend le premier sous-ensemble (412) et le second bras manipulateur (2) prend le second sous-ensemble (434), et lesdits bras manipulateurs (1, 2) coopèrent pour assembler mutuellement lesdits premier et second sous-ensembles (412, 434) pour former un ensemble joint (402), et pendant l'étape d), au moins l'un desdits premier et second bras manipulateurs (1, 2) est déplacé pour amener ledit ensemble joint (402) en assemblage avec le composant récepteur (401),
et dans lequel le composant récepteur (401) demeure en état stationnaire pendant l'étape b), c'est-à-dire qu'il ne subit pas d'opérations d'assemblage pendant l'assemblage mutuel entre le premier et le second sous-ensemble (412, 434).

7. Procédé d'assemblage selon l'une quelconque des revendications précédentes, comprenant l'étape a2) consistant à fournir un dispositif de préhension (70), par exemple une palette (70) ou une table rotative, situé sur une surface de travail (700) qui est sensiblement parallèle à une surface de sol, sur lequel le composant récepteur (401) est positionné de telle sorte que l'étape d) consiste à positionner lesdits au moins deux sous-ensembles (412, 434) par le haut dans le composant récepteur (401) en état stationnaire, et dans l'assemblage desdits sous-ensembles (412, 434) avec le composant récepteur (401).

8. Procédé d'assemblage selon la revendication 7, dans lequel le composant récepteur (401) est positionné sur le dispositif de préhension (70) avec le siège de réception (40) orienté vers le haut, c'est-à-dire du côté opposé par rapport à la surface de travail (700),
et dans lequel pendant l'étape d), le dispositif d'assemblage (1) se déplace vers le siège de réception (40) au moins selon une direction verticale (Z), perpendiculaire à ladite surface de travail (700), pour placer par le haut l'ensemble joint (402) dans le siège de réception (40).

9. Procédé d'assemblage selon les revendications 6 et 8, dans lequel l'étape d) consiste en la descente synchrone de chaque bras manipulateur (1, 2) le long de ladite direction verticale (Z) vers ledit dispositif de préhension (70) et dans le placement, par le haut, de l'ensemble joint (402) dans le siège de réception (40).

10. Procédé d'assemblage selon l'une quelconque des revendications précédentes, dans lequel une fois assemblés, lesdits au moins deux sous-ensembles (412, 434) et le composant récepteur (401) forment un ou plusieurs sièges d'insertion de rivet aptes à recevoir un ou plusieurs rivets (45) pour connecter lesdits au moins deux sous-ensembles (412, 434) de manière articulée au composant récepteur (401), et dans lequel le procédé d'assemblage comprend, après l'étape d), les étapes opératoires suivantes :
h) fournir un appareil de rivetage (8) comprenant une machine de rivetage (81), et alimenter ledit appareil de rivetage (8) avec un ou plusieurs rivets (45) ;
i) connecter, au moyen de ladite machine de rivetage (81), lesdits au moins deux sous-ensembles (412, 434) de manière articulée au composant récepteur (401) au moyen de l'insertion dudit ou desdits rivets (45) dans ledit ou lesdits sièges d'insertion de rivet.

11. Procédé d'assemblage selon l'une quelconque des revendications 7 à 10, dans lequel le composant récepteur (401) est maintenu en état stationnaire en maintenant le dispositif de préhension (70) dans la même position, de préférence temporairement immobile, au poste d'assemblage, pendant que les étapes du procédé selon une ou plusieurs des revendications précédentes ont lieu.

12. Installation d'assemblage (9) pour assembler des articles multicomposants (4) à partir d'un premier sous-ensemble (412), d'un second sous-ensemble (434) et d'un composant récepteur (401), dans laquelle le premier sous-ensemble (412) et le second sous-ensemble (434) sont aptes à être assemblés l'un à l'autre pour former un ensemble joint (402),
ladite installation d'assemblage (9) comprenant :
au moins un poste d'assemblage ;
un ou plusieurs sous-postes (91, 92) proximaux audit poste d'assemblage ;
au moins un dispositif d'assemblage apte à prendre au moins deux sous-ensembles (412, 434) depuis ledit un ou plusieurs sous-postes (91, 92) de l'installation et à les assembler dans le poste avec un composant récepteur (401),
un dispositif de préhension (70) sur lequel un composant récepteur (401), ayant un siège de réception (40) apte à recevoir ledit ensemble joint (402) formé par ledit premier sous-ensemble (412) et ledit second sous-ensemble (434), est logeable,
et **caractérisée en ce que**
ledit au moins un dispositif d'assemblage comprend
un premier bras manipulateur (1) et un second bras manipulateur (2) aptes à assembler lesdits sous-ensembles (412, 434) pour former l'ensemble joint (402) de manière espacée par rapport au composant récepteur (401) et aptes à amener ledit ensemble joint (402) au siège de réception (40) dudit composant récepteur (401),
et dans laquelle le composant récepteur (401) est apte à demeurer en état stationnaire pendant l'assemblage de l'ensemble joint (402) et au moins jusqu'à ce que l'ensemble joint (402) soit placé dans le siège de réception (40),
ladite installation d'assemblage (9) étant configurée pour exécuter le procédé d'assemblage selon l'une quelconque des revendications précédentes.

13. Installation d'assemblage (9) selon la revendication 12, dans laquelle ledit un ou plusieurs sous-postes (91, 92) comprennent un premier groupe de pré-assemblage (91) apte à pré-assembler un premier composant (41) et un second composant (42) pour former le premier sous-ensemble (412), et un second groupe de pré-assemblage (92) apte à pré-assembler un troisième composant (43) et un quatrième composant (44) pour former le second sous-ensemble (434), et dans laquelle le composant récepteur (401) est apte à demeurer en état stationnaire également pendant le pré-assemblage desdits premier et second sous-ensembles (412, 434).

14. Installation d'assemblage (9) selon la revendication 12 ou 13, dans laquelle le dispositif de préhension (70) est positionné sur une surface de travail (700) parallèle à une surface de sol et dans laquelle les premier (1) et second bras manipulateurs (2) sont aptes à se déplacer intégralement mutuellement le long d'une direction verticale (Z) perpendiculaire à ladite surface de travail (700).

15. Installation d'assemblage (9) selon la revendication 12 ou 13 ou 14, dans laquelle le dispositif de préhension (70) comprend un siège de support (71) apte à loger fermement un composant récepteur (401) de telle sorte que le siège de réception (40) soit orienté vers le haut, c'est-à-dire du côté opposé par rapport à la surface de travail (700).

16. Ligne d'assemblage comprenant une installation d'assemblage (9) selon l'une quelconque des revendications 12 à 15.

17. Ligne d'assemblage selon la revendication précédente et comprenant :
un système de transport apte à permettre l'avancement, le long d'un axe d'avancement (X) parallèle à la surface de sol, d'une succession de palettes (70) chacune apte à transporter au moins un composant récepteur (401) ;
une unité de commande électronique apte à envoyer un signal d'arrêt audit système de transport de sorte que le système de transport permette au dispositif de préhension (70) de s'arrêter au poste d'assemblage afin de maintenir le composant récepteur respectif en état stationnaire,
et ladite unité de commande électronique étant apte à envoyer un signal de redémarrage audit système de transport uniquement à la fin des opérations d'assemblage dans le poste d'assemblage de sorte que le système de transport active l'avancement du dispositif de préhension (70) pour amener le composant récepteur (401) hors de l'état stationnaire et le long de l'axe d'avancement (X) uniquement une fois que l'assemblage desdits au moins deux sous-ensembles (412, 434) avec le composant récepteur (401) dans le poste d'assemblage est terminé.
